# EUROPÄISCHE PATENTSCHRIFT

(11) **EP 4 200 101 B1**
(45) Veröffentlichungstag und Bekanntmachung des Hinweises auf die Patenterteilung: **19.02.2025**
(21) Anmeldenummer: 20767480.5
(22) Anmeldetag: 21.08.2020
(51) Int. Cl.: B23K 26/38, B23K 26/60, B23K 26/06

(54) **VERFAHREN ZUR HERSTELLUNG MINDESTENS EINES WERKSTÜCKTEILS UND EINES RESTWERKSTÜCKS AUS EINEM WERKSTÜCK**
METHOD FOR PRODUCING AT LEAST ONE WORKPIECE PART AND A RESIDUAL WORKPIECE FROM A WORKPIECE
PROCÉDÉ DE PRODUCTION D'AU MOINS UNE PARTIE DE PIÈCE À USINER ET D'UNE PIÈCE À USINER RÉSIDUELLE À PARTIR D'UNE PIÈCE À USINER

(43) Veröffentlichungstag der Anmeldung: 28.06.2023
(73) Patentinhaber: TRUMPF Werkzeugmaschinen SE + Co. KG, 71254 Ditzingen (DE); WSoptics technologies GmbH, 87675 Rettenbach am Auerberg (DE)
(72) Erfinder: SEPP, Florian, 86972 Altenstadt (DE); MOCK, Daniel, 71394 Kernen (DE); MACH, Patrick, 71384 Weinstadt (DE); WEISS, Christoph, 86956 Schongau (DE)
(74) Vertreter: Trumpf Patentabteilung
(86) Internationale Anmeldenummer: PCT/EP2020/073578
(87) Internationale Veröffentlichungsnummer: WO 2022/037797

(56) Entgegenhaltungen:
- WO-A1-2016/033494
- US-A1- 2014 151 347
- US-B1- 10 384 306

## Beschreibung

Die Erfindung liegt auf dem technischen Gebiet der Fertigung metallischer Werkstückteile und betrifft ein Verfahren zur Laserbearbeitung eines platten- oder rohrförmigen Werkstücks, bei dem eine trennende Bearbeitung des Werkstücks zur Erzeugung eines Schnittspalts sowie eine nicht-trennende und zugleich nicht-fügende Modifikation des Werkstücks durch einen Laserstrahl erfolgt.

Im Handel verfügbare Laserschneidvorrichtungen mit einem verfahrbaren Laserbearbeitungskopf zur Führung eines Laserstrahls ermöglichen eine automatisierte Fertigung von Werkstückteilen in großer Stückzahl und mit hoher Präzision. Hierbei werden Werkstückteile mittels des Laserstrahls aus einem platten- oder rohrförmigen metallischen Werkstück entlang jeweiliger Schnittlinien ausgeschnitten.

Abhängig von derArt des eingesetzten Laserschneidprozesses und der Verwendung der ausgeschnittenen Werkstückteile können die Schnittkanten der Werkstückteile eine aufwändige mechanische Nachbearbeitung benötigen. So kann es gewünscht sein, scharfe Schnittkanten zu runden oder mit einer Fase zu versehen sowie Grate, welche insbesondere durch bei der Laserbearbeitung gebildete Schlacken bzw. Schmelzreste entstanden sind, zu entfernen.

Grundsätzlich ist eine dem vollständigen Ausschneiden eines Werkstückteils nachgelagerte mechanische Bearbeitung im Bereich der Schnittkanten zeitlich und meist auch personell sehr aufwändig, zumal sie oft manuell erfolgt. Zudem ist eine solche Nachbearbeitung kostenintensiv, so dass sich die Herstellung von Werkstückteilen in unerwünschter Weise verlängert und verteuert. Das Dokument US 2014/151347 offenbart ein Verfahren zum Schneiden eines Werkstückes, wobei eine Mulde an der Werkstückoberseite erzeugt wird, und anschließend ein Schnittspalt entlang der Schnittlinie erzeugt wird, wobei die Schnittlinie innerhalb der Mulde angeordnet ist.

Demgegenüber besteht die Aufgabe der vorliegenden Erfindung darin, herkömmliche Verfahren, bei denen Werkstückteile mittels eines Laserstrahls aus einem platten- oder rohrförmigen Werkstück ausgeschnitten werden, so weiterzubilden, dass die Herstellung von Werkstückteilen mit gefasten oder verrundeten Schnittkanten, sowie mit entfernten Graten, in automatisierter Weise schneller, kostengünstiger und mit hoher Qualität erfolgen kann.

Diese Aufgabe wird gelöst durch ein zweistufiges Verfahren zur Herstellung eines Werkstückteils und eines Restwerkstücks aus dem Werkstück mittels eines Laserstrahls und eines Prozessgases zum Austrieb von geschmolzenem Werkstückmaterial, die gemeinsam aus einer Düse eines Laserbearbeitungskopfs austreten.

Im Sinne vorliegender Erfindung bezeichnet der Begriff "Werkstück" ein platten- oder rohrförmiges, typischerweise metallisches Bauteil, aus dem mindestens ein Werkstückteil (Gutteil) herzustellen ist. Das plattenförmige Werkstück ist typischer Weise eben bzw. flach. Obgleich das erfindungsgemäße Verfahren zur Strahlbearbeitung eines platten- oder rohrförmigen Werkstücks an einem einzelnen Werkstückteil erläutert wird, versteht es sich, dass in aller Regel eine Vielzahl von Werkstückteilen aus dem Werkstück hergestellt werden.

In dem erfindungsgemäßen Verfahren erfolgt, neben einer trennenden Bearbeitung des Werkstücks zur Erzeugung eines Schnittspalts, auch eine nicht-trennende und zugleich nicht-fügende Modifikation des Werkstücks mittels Laserstrahl. Der Laserstrahl kann durch Einstellen seiner Leistungsdichte wahlweise zur trennenden Bearbeitung oder alternativ zur nicht-trennenden und zugleich nicht-fügenden Bearbeitung des Werkstücks eingesetzt werden.

Die Energiedichte des Laserstrahls gibt die Energie des Laserstrahls in Bezug auf die vom Laserstrahl bestrahlte Fläche des Werkstücks an, beispielsweise bemessen in J/mm². Relevant für die Erzeugung eines Schnittspalts oder eine nicht-trennende bzw. nicht-fügende Modifikation des Werkstücks ist die Energiedichte in Bezug auf das Zeitintervall, in dem die bestrahlte Fläche des Werkstücks bestrahlt wird, beispielsweise bemessen in J/(mm² x s), hier und im Weiteren als "Leistungsdichte" bezeichnet. Wenn es in wesentlicher Weise auf die vom Werkstück absorbierte Leistungsdichte ankommt, kann unter der Leistungsdichte auch die vom Werkstück absorbierte Leistungsdichte verstanden werden.

Die Laserbearbeitung eines platten- oder rohrförmigen Werkstücks umfasst das Erzeugen eines das Werkstück durchtrennenden Schnittspalts bzw. eines oder mehrerer Abschnitte des Schnittspalts entlang einer Schnittlinie des Werkstückteils. Die Schnittlinie entspricht einer Kontur (d.h. Umriss) des aus dem Werkstück herzustellenden Werkstückteils. Beim Erzeugen des Schnittspalts wird der Laserbearbeitungskopf über dem Werkstück verfahren, wobei der Laserstrahl entlang der Schnittlinie geführt wird. Die Schnittlinie ist somit eine vorgegebene bzw. vorzugebende (gedachte) Linie bzw. Bahn, entlang welcher der Laserstrahl bzw. Laserbearbeitungskopf zum Ausschneiden des durch die Schnittlinie konturierten Werkstückteils geführt wird. Bei der trennenden Bearbeitung des Werkstücks hat der Laserstrahl eine Leistungsdichte, die so bemessen ist, dass das Werkstück (vollständig) durchtrennt wird. Der Laserstrahl wirkt mit einem auf die Schnittfuge gerichteten Prozessgas (Schneidgas) zusammen. Die Leistungsdichte kann verschiedene Werte annehmen, muss also nicht konstant sein.

In der vorliegenden Erfindungsbeschreibung ist das Bezugssystem immer stationär zum Werkstück, so dass der Laserbearbeitungskopf als bewegt und das Werkstück als stationär angesehen werden. Lokal betrachtet ist es jedoch unerheblich, ob der Laserbearbeitungskopf oder das Werkstück oder beide bewegt werden. Insofern wäre es gleichermaßen möglich, dass alternativ zum bewegten Laserbearbeitungskopf auch das Werkstück bewegt wird oder sowohl der Laserbearbeitungskopf als auch das Werkstück bewegt werden.

Durch Erzeugen des Schnittspalts bzw. eines oder mehrerer Abschnitte des Schnittspalts entlang der Schnittlinie wird das Werkstückteil entlang seiner Kontur teilweise oder vollständig ausgeschnitten, d.h. der Schnittspalt ist stets konturbildend. Dementsprechend fallen unter den Begriff "Schnittspalt" im Sinne vorliegender Erfindung keine Abschnitte des Schnittspalts, welche nicht konturbildend sind und sich nicht entlang der Kontur des Werkstückteils erstrecken. Beispielsweise wird beim Ausschneiden eines Werkstückteils häufig entfernt von der Kontur in das Werkstück eingestochen und der Laserstrahl erst ein Stück weit hin zur konturbildenden Schnittlinie des Werkstückteils verfahren.

Das Freischneiden eines Werkstückteils vom Werkstück, d.h. das vollständige Ausschneiden des Werkstückteils aus dem Werkstück, so dass dieses vom Werkstück gelöst bzw. entfernt werden kann, erfolgt durch Erzeugen eines geschlossenen Schnittspalts entlang der Schnittlinie des Werkstückteils.

Im Sinne vorliegender Erfindung wird das verbleibende Werkstück, wenn mindestens ein auszuschneidendes Werkstückteil zumindest gedanklich entfernt wird, als "Restwerkstück" bezeichnet. Erfindungsgemäß erfolgt eine Modifikation des Werkstücks nur dann, wenn das Werkstückteil teilweise, d.h. nicht vollständig, ausgeschnitten ist oder alternative überhaupt noch keine trennende Bearbeitung am Werkstückteil erfolgt ist. Der Schnittspalt wird stets durch zwei einander gegenüberliegende Schnittkanten begrenzt, d.h. eine werkstückteilseitige Schnittkante und eine restwerkstückseitige Schnittkante.

Ein teilweise ausgeschnittenes Werkstückteil ist mit dem übrigen Werkstück (d.h. Restwerkstück) weiterhin fest verbunden, d.h. das teilweise ausgeschnittene Werkstückteil ist noch fester Bestandteil des Werkstücks. Im Sinne vorliegender Erfindung ist die Verbindung eines teilweise ausgeschnittenen Werkstückteils mit dem Restwerkstück hinreichend starr, so dass eine Lageänderung des teilweise ausgeschnittenen Werkstückteils relativ zum Werkstück (Restwerkstück) bei einer Modifikation des Werkstücks nicht auftritt bzw. eine hierbei etwaig auftretende Lageänderung vernachlässigbar klein ist und zu keiner vernünftiger Weise zu berücksichtigenden Änderung des Ergebnisses bei einer erfindungsgemäßen Modifikation des Werkstücks führt.

Der Laserstrahl tritt wie üblich gemeinsam mit dem Prozessgas aus einer Düse, welche Teil eines Laserbearbeitungskopfs ist, aus. Die Düse liegt einer Werkstückoberseite gegenüber. Das Werkstück, insbesondere ein plattenförmiges Werkstück, liegt mit einer Werkstückunterseite einer Werkstückauflage auf. An der Werkstückoberseite weist das Werkstück eine (oberseitige) Werkstückoberfläche auf. Bei einem plattenförmigen Werkstück ist die Werkstückoberfläche plan. Wenn nicht anders verwendet, wird hier und im Weiteren als "Werkstückoberfläche" die oberseitige Werkstückoberfläche verstanden, welche der Düse gegenüberliegt bzw. der Düse zugewandt ist.

Das erfindungsgemäße Verfahren umfasst die folgenden Schritte:
Schritt a): Schneiden eines Abschnitts eines das Werkstück durchtrennenden Schnittspalts entlang einer Schnittlinie oder alternativ Schneiden eines geschlossenen Schnittspalts entlang der Schnittlinie, wobei Schnittkanten am Werkstückteil und Restwerkstück gebildet werden.
Schritt b): Erzeugen einer Modifikation des Werkstücks, gewählt aus einer Fase, einer Verrundung und einer Mulde, an der Werkstückoberseite entlang einer Modifikationslinie, während das Werkstückteil mit dem Restwerkstück verbunden ist.

Hierbei ist der Laserstrahl in den Schritten a) und b) senkrecht zur Werkstückoberfläche ausgerichtet. Ein Gasdruck des Prozessgases in Schritt b) beträgt weniger als 7 bar und insbesondere zwischen 3 bar und 6 bar. Dieser Gasdruck (Kesseldruck) gilt innerhalb des Laserbearbeitungskopfs vor dem Austritt des Prozessgases aus der Düse.

In dem erfindungsgemäßen Verfahren wird Schritt a) vor Schritt b) ausgeführt.

Die Schritte a) und b) können jeweils mehrmals nacheinander ausgeführt werden, ohne dass der jeweils andere Schritt zwischen zwei Schritten gleicher Benennung ausgeführt wird. Gemäß einer Ausgestaltung des erfindungsgemäßen Verfahrens werden eine Mehrzahl von Schritten a) vor einem oder mehreren Schritten b) ausgeführt. Gemäß einer noch weiteren Ausgestaltung des erfindungsgemäßen Verfahrens werden eine Mehrzahl von Schritten a) und eine Mehrzahl von Schritten b) in alternierender Abfolge ausgeführt, wobei nach einem Schritt mit der einen Benennung (d.h. Schritt a) oder b)) jeweils ein Schritt mit der anderen Benennung (d.h. Schritt b) oder a)) ausgeführt wird. Die verschiedenen Ausgestaltungen des erfindungsgemäßen Verfahrens sind miteinander kombinierbar.

So kann beispielsweise Schritt a) ein- oder mehrmalig ausgeführt werden, gefolgt von einem ein- oder mehrmaligen Ausführen von Schritt b).

In dem erfindungsgemäßen Verfahren wird Schritt a) vor Schritt b) ausgeführt, wobei in Schritt a) ein Abschnitt des Schnittspalts entlang der Schnittlinie erzeugt wird. Es wird kein geschlossener Schnittspalt erzeugt. Vielmehr bleibt das Werkstückteil weiterhin mit dem Restwerkstück verbunden. Anschließend wird in Schritt b) mindestens ein Teil mindestens einer der Schnittkanten am Werkstückteil oder am Restwerkstück mit einer Fase oder einer Verrundung versehen.

Bei der Erfindung ist nach Ausführen von Schritt a) bzw. nach Ausführen einer Mehrzahl von Schritten a) das Werkstückteil weiterhin über einen oder mehrere Stege, insbesondere Microjoints oder Nanojoints, mit dem Restwerkstück verbunden. Im Sinne vorliegender Erfindung wird als "Steg" eine sich entlang der Schnittlinie erstreckende Verbindung aus Werkstückmaterial zwischen Werkstückteil und Restwerkstück verstanden, wobei der Steg den Schnittspalt unterbricht. Ein "Microjoint" ist ein Steg mit einer relativ geringen Abmessung entlang der Schnittlinie, welche erfindungsgemäß bevorzugt im Bereich von 1/10 mm bis 2 mm, besonders bevorzugt im Bereich von 1/10 mm bis 1 mm liegt. In der gängigen Verwendung des Begriffs, weist ein Microjoint eine Höhe auf, welche der Höhe bzw. Dicke des Werkstücks (d.h. Abmessung senkrecht zur Werkstückoberfläche) entspricht. Ein "Nanojoint" ist ein Microjoint, dessen Höhe in Bezug auf die Dicke des Werkstücks reduziert ist, wobei die Höhe eines Nanojoints erfindungsgemäß bevorzugt maximal die Hälfte der Dicke des Werkstücks beträgt. Microjoints und Nanojoints sind dem Fachmann aus der Praxis der Fertigung von Blech-Werkstückteilen durch Laserbearbeitung und aus der Patentliteratur wohlbekannt, so dass hier nicht näher darauf eingegangen werden muss. Lediglich ergänzend wird bezüglich Nanojoints beispielsweise auf die internationale Patentanmeldung WO 2019025327 A2 verwiesen.

Demnach wird nach Ausführen von Schritt a) bzw. einem mehrfachen Ausführen von Schritt a) mindestens ein Teil mindestens einer der gebildeten Schnittkanten am Werkstückteil oder am Restwerkstück mit einer Fase oder Verrundung versehen, während das Werkstückteil noch mit dem Restwerkstück verbunden ist. Erst danach erfolgt ein Freischneiden des Werkstückteils, beispielsweise durch den Laserstrahl oder manuell, beispielsweise durch Herausbrechen des Werkstückteils vom Werkstück. Gemäß einer bevorzugten Ausgestaltung des erfindungsgemäßen Verfahrens verlaufen die Schnittlinie und die Modifikationslinie parallel, wobei die Modifikationslinie einen lateralen Versatz senkrecht zur Schnittlinie aufweist. Die Schnittlinie und die Modifikationslinie sind bei dieser Ausgestaltung des Verfahrens also nicht identisch, d.h. haben keinen identischen Verlauf.

Bei einer besonders vorteilhaften Ausgestaltung des erfindungsgemäßen Verfahrens wird in Schritt b) auch der mindestens eine Steg, insbesondere Microjoint oder Nanojoint, modifiziert, d.h. mit einer Fase oder einer Verrundung versehen. Wie die Erfinder überraschend festgestellt haben, stört ein Steg zwischen Werkstückteil und Restwerkstück nur geringfügig die Gasdynamik des Prozessgases, wenn der Steg entlang der Schnittlinie hinreichend klein dimensioniert ist. Dies gilt insbesondere dann, wenn der Steg als Microjoint ausgebildet ist und eine Abmessung entlang der Schnittlinie im Bereich von 1/10 mm bis 2 mm, besonders bevorzugt im Bereich von 1/10 mm bis 1 mm aufweist. Besonders vorteilhaft handelt es hierbei um einen Nanojoint, dessen Höhe bevorzugt maximal die Hälfte der Dicke des Werkstücks entspricht. Insbesondere beim Erzeugen einer Verrundung ist diese Vorgehensweise besonders vorteilhaft, da eine scharfkantige Werkstückkante an der Werkstückoberfläche nur aufgeschmolzen wird und sich aufgrund der hohen Oberflächenspannung der flüssigen Schmelze zu einer Verrundung zusammenzieht

Die Erfinder haben erkannt, dass es für die Erzeugung einer verrundeten oder mit einer Fase versehenen Schnittkante an einem Werkstückteil von Vorteil ist, wenn das Werkstückteil mit dem Restwerkstück verbunden ist, sich also beiderseits des Schnittspalts noch Werkstückmaterial befindet. Auf diese Weise ist zum einen das Werkstückteil in seiner Lage fixiert und kann nicht rutschen oder kippen, so dass der Laserstrahl beim Erzeugen der Fase oder Verrundung exakt zur Schnittkante positioniert werden kann. Außerdem fließt die Schmelze, welche beim Erzeugen der Fase oder Rundung entsteht, in den Schnittspalt und kann daraus - insbesondere bei Verwendung von Sauerstoff als Prozessgas - einfacher entfernt werden als von der Oberseite der Fase.

Auch bei der Erzeugung einer Fase oder Verrundung ist es notwendig, nicht nur mit dem Laserstrahl, sondern auch mit dem Prozessgasstrahl auf das Werkstück einzuwirken, um die entstehende Schmelze bzw. Schlacke abzuführen. Dabei darf der Druck des Prozessgases vor dem Austritt aus der Düse nicht mehr als 7 bar betragen, um zu starke Materialspritzer auf der Werkstückoberfläche zu vermeiden. Bevorzugt beträgt der Gasdruck zwischen 3 bar und 6 bar, wodurch einerseits ein gutes Abführen der Schmelze erreicht wird, andererseits Materialspritzer zuverlässig und sicher vermieden werden können.

Vorzugsweise ist der Abstand zwischen der Düse, aus welcher der Laserstrahl austritt, und der Werkstückoberfläche in Schritt b) größer als in Schritt a), um eine weniger konzentrierte, "weichere" Einwirkung des Prozessgases auf die Werkstückoberfläche zu erreichen. Zudem ermöglicht der größere Abstand der Düse von der Werkstückoberfläche einen größeren Strahlfleck auf dem Werkstück. Die ermöglicht insbesondere die Fertigung breiterer Fasen.

Grundsätzlich ist ein erfindungsgemäß vorteilhafter Abstand zwischen der Düse und dem Werkstück bzw. der Werkstückoberfläche vom eingesetzten Prozessgas abhängig. Gemäß einer vorteilhaften Ausgestaltung der Erfindung beträgt der Abstand zwischen Düse und Werkstückoberfläche in Schritt b) für das Erzeugen von Fasen mit Sauerstoff als Prozessgas bevorzugt mindestens 9 mm, besser mindestens 20 mm und besonders bevorzugt mindestens 35 mm. Für das Erzeugen von Verrundungen mit Stickstoff als Prozessgas beträgt der Abstand zwischen der Düse und dem Werkstück in Schritt b) bevorzugt mindestens 1 mm, besser mindestens 6 mm und besonders bevorzugt mindestens 9 mm.

Erfindungsgemäß wird gemäß einer vorteilhaften Ausgestaltung der Erfindung in Schritt b) für ein Werkstück aus Baustahl vorzugsweise Sauerstoff als Prozessgas eingesetzt. Auf diese Weise wird die gebildete Schmelze in vorteilhafter Weise im Schnittspalt vollständig oxidiert und kann daher leicht vom Werkstück entfernt werden.

In dem erfindungsgemäßen Verfahren ist die Leistungsdichte oder die Streckenenergie des Laserstrahls am Werkstück in Schritt b) geringer als in Schritt a), was vorzugsweise durch ein Verringern der Leistung des Laserstrahls, ein Erhöhen der Vorschubgeschwindigkeit des die Düse enthaltenden Laserbearbeitungskopfs, ein Defokussieren des Laserstrahls durch Ändern der Fokuslage relativ zum Werkstück und/oder durch ein Ändern des Strahldurchmessers an der Werkstückoberfläche erreicht werden kann.

Der an einer jeweiligen Stelle des Laserstrahls vorliegende Strahldurchmesser senkrecht zur Strahlachse bestimmt die Leistungsdichte des Laserstrahls an dieser Stelle des Laserstrahls. Der Strahldurchmesser ist der Durchmesser der kreisförmigen Querschnittfläche des Laserstrahls senkrecht zur Strahlachse. Für eine fokusferne Bearbeitung gilt: je größer der Strahldurchmesser, desto kleiner ist die Leistungsdichte, und umgekehrt. Im Bereich zwischen Fokussierlinse oder Fokussierspiegel und Fokus konvergiert der Laserstrahl, nach dem Fokus divergiert der Laserstrahl. Betrachtet in Richtung der Strahlausbreitung nimmt im konvergenten Bereich mit zunehmendem Abstand von der Fokussierlinse oder Fokussierspiegel die Leistungsdichte zu, hat im Fokus ihren höchsten Wert und nimmt im divergenten Bereich mit zunehmendem Abstand vom Fokus ab.

Die Leistungsdichte auf dem Werkstück hängt somit von der Größe der bestrahlten Fläche (Strahlfleck auf Werkstück), entsprechend dem Strahldurchmesser an der Stelle, an der der Laserstrahl das Werkstück trifft, ab. Der Strahldurchmesser auf dem Werkstück hängt von der Fokuslage des Laserstrahls ab. Unter dem Begriff "Fokuslage" ist die Position des Fokus relativ zum Werkstück, insbesondere relativ zur Ebene der Werkstückoberfläche zu verstehen. Die Fokuslage ist der senkrechte (kürzeste) Abstand des Fokus von der Werkstückoberfläche. Durch eine Änderung der Fokuslage kann der Strahldurchmesser auf dem Werkstück verändert werden. Wenn sich das Werkstück im divergenten Bereich des Strahlkegels befindet (Fokus oberhalb der Werkstückoberfläche), kann durch eine Vergrößerung des Abstands zwischen Fokus und Werkstück der Strahldurchmesser auf dem Werkstück vergrößert werden, und umgekehrt.

Somit kann durch eine Änderung des Strahldurchmessers auf dem Werkstück die Leistungsdichte auf dem Werkstück gezielt verändert werden. Bei einem Laser ist die Stahlintensität außerhalb des Fokus, bezogen auf den Querschnitt, nicht konstant. Idealerweise ist die Leistungsintensität ein Gauß-Profil. Auf jeden Fall ist die Leistungsdichte zum Rand hin relativ gering, insbesondere außerhalb des Fokus.

Bei einer vorteilhaften Ausgestaltung des erfindungsgemäßen Verfahrens liegt in Schritt b) der Fokus des Laserstrahls auf oder oberhalb der Werkstückoberfläche. Die mittlere Laserleistung beträgt in Schritt b) vorzugsweise weniger als 3500 W, der Fokusdurchmesser des Laserstrahls beträgt vorzugsweise mindestens 150 µm und/oder die Vorschubgeschwindigkeit beträgt vorzugsweise mindestens 1 m/min.

Je näher der Fokus des Laserstrahls am Werkstück liegt, desto größer sollte in Schritt b) der Fokusdurchmesser gewählt werden. So beträgt der Fokusdurchmesser bei einer Fokuslage auf der Werkstückoberfläche vorzugsweise mehr als 250 µm.

Erfindungsgemäß sind die Schnittlinie und Modifikationslinie so gewählt, dass sie parallel verlaufen und einen lateralen Versatz senkrecht zur Schnittlinie aufweisen. Der Versatz zwischen der Schnittlinie und der Modifikationslinie beträgt bevorzugt mindestens 0,2 mm und nicht mehr als 1,5 mm, wodurch eine gewünschte Modifikation des Werkstücks effizient und sicher erzeugt werden kann.

Das Verfahren wird vorteilhaft so durchgeführt, dass zum Erzeugen einer Fase oder Verrundung an der Schnittkante nur ein einmaliges Einwirken des Laserstrahls auf das Werkstück notwendig ist und kein mehrfaches Bewegen des Laserstrahls entlang der Modifikationslinie durchgeführt wird.

In dem erfindungsgemäßen Verfahren wird der Laserstrahl in Schritt b) entlang der Modifikationslinie geführt. Gemäß einer Ausgestaltung des erfindungsgemäßen Verfahrens wird in Schritt b) der Laserstrahl stets geradlinig entlang der Modifikationslinie bewegt. In diesem Fall ist die Bahn des Laserstrahls entlang der Modifikationslinie identisch zur Modifikationslinie. Eine Fase oder Verrundung an einer bereits gebildeten Schnittkante kann somit durch eine geradlinige Bewegung des Laserstrahls entlang der Modifikationslinie erzeugt werden, was eine besonders schnelle Modifikation des Werkstücks ermöglicht. Gleichermaßen kann eine Mulde an der Werkstückoberfläche in einfacher Weise besonders schnell erzeugt werden.

In dem erfindungsgemäßen Verfahren kann es gemäß einer alternativen Ausgestaltung, insbesondere für beide Verfahrensvarianten, von Vorteil sein, den Laserstrahl in Schritt b) auch quer zur Modifikationslinie zu bewegen. In diesem Fall weist die Bewegung des Laserstrahls in Schritt b) entlang der Modifikationslinie, neben Bewegungskomponenten entlang der Modifikationslinie, auch Bewegungskomponenten quer (d.h. senkrecht) zur Modifikationslinie auf, so dass ein größerer Bereich des Werkstücks vom Laserstrahl überstrichen wird.

Gemäß einer bevorzugten Ausgestaltung des erfindungsgemäßen Verfahrens vollführt der Laserstrahl hierbei eine mäanderförmige Hin- und Her-Bewegung entlang der Modifikationslinie. Der Laserstrahl wird dabei bei seiner Bewegung entlang der Modifikationslinie mehrfach von der Modifikationslinie weggeführt und jeweils wieder hingeführt.

Gemäß einer alternativen bevorzugten Ausgestaltung wird der Laserstrahl hierbei entlang jeweils geschlossener Bahnabschnitte geführt, die entlang der Modifikationslinie vorzugsweise reihenförmig angeordnet sind. Jeder geschlossener Bahnabschnitt ist durch ein Kreuzen der vorher durchlaufenen Bahn des Laserstrahls definiert. Beispielsweise sind die geschlossenen Bahnabschnitte kreisförmig geschlossene Bahnabschnitte (d.h. Kreise) oder Ellipsen, die entlang der Modifikationslinie vorzugsweise reihenförmig angeordnet sind. So können insbesondere Fasen mit größeren Fasentiefen und/oder Fasenbreiten entlang der Modifikationslinie erzeugt werden. Vorteilhaft weist eine Bewegungskomponente des Laserstrahls quer zur Modifikationslinie eine Ausdehnung von mindestens 0,5 mm und höchstens 5 mm auf.

Vorzugsweise weist der Laserstrahl beim Verfahren entlang geschlossener Bahnabschnitte, insbesondere entlang von Kreisen oder Ellipsen, einen Überlapp entlang der Modifikationslinie im Bereich von 0,5 mm bis 1 mm auf. Vorteilhaft beträgt ein Überlapp der geschlossener Bahnabschnitte (z.B. Kreise) entlang der Modifikationslinie 0,5 mm bis 1 mm.

In einer Weiterbildung des Verfahrens wird nach den Schritten a) und b) ein weiterer Verfahrensschritt c) durchgeführt, bei dem während der Schritte a) und b) gebildete Schlacke/Schmelze vom Werkstück entfernt wird.

Schritt c) umfasst das Entfernen von Schlacke von mindestens einer der Schnittkanten bzw. Fasenkanten am Werkstückteil oder Restwerkstück, wobei der Laserstrahl entlang der Schnittlinie oder einer hierzu lateral versetzten Linie verfahren wird, und/oder das Entfernen von Schlacke von einer Fase oder einer Verrundung, wobei der Laserstrahl entlang der Modifikationslinie oder einer hierzu lateral versetzten Linie verfahren wird.

Die Leistungsdichte bzw. die Streckenenergie des Laserstrahls am Werkstück ist in Schritt c) geringer als in Schritt a). In aller Regel ist die Laserleistung beim Entfernen der Schlacke/Schmelze deutlich kleiner als beim Schneidprozess, wobei die mittlere Leistung vorzugsweise weniger als 1000 W beträgt. Der Abstand zwischen Düse und Werkstückoberfläche ist in Schritt c) vorzugsweise größer als in Schritt a) und beträgt vorzugsweise mindestens 5 mm, bevorzugt zwischen 6 mm und 12 mm. Der Gasdruck des Prozessgases im Laserbearbeitungskopf ist in Schritt c) vorzugsweise niedriger als in Schritt a) und beträgt vorzugsweise weniger als 7 bar, bevorzugt zwischen 0,7 bar und 6 bar. Der Fokusdurchmesser des Laserstrahls beträgt vorzugsweise mindestens 150 µm.

Gemäß einer vorteilhaften Ausgestaltung des Verfahrens erfolgt durch den in Schritt c) eingesetzten Laserstrahl zugleich ein Freischneiden des Werkstückteils vom Restwerkstück, wobei eine Laserleistung des Laserstrahls zu diesem Zweck vorzugsweise mindestens 500 W beträgt. Besonders vorteilhaft erfolgt dies bei einer Verbindung des Werkstückteils mit dem Restwerkstück durch einen oder mehrere Nanojoints (d.h. Microjoints mit einer verringerten Höhe), welche durch den zum Entfernen der Schlacke eingesetzten Laserstrahl gut durchtrennt werden können.

In dem erfindungsgemäßen Verfahren gemäß der ersten Verfahrensvariante werden ein oder mehrere Abschnitte des Schnittspalts erzeugt. Beispielsweise grenzen benachbarte Abschnitte des Schnittspalts an einen Steg, insbesondere Microjoint oder Nanojoint, an. Möglich ist jedoch auch, dass der Schnittspalt durch die Abschnitte sukzessiv verlängert wird.

Eine Modifikation des Werkstücks erfolgt in dem erfindungsgemäßen Verfahren jedenfalls bei nicht freigeschnittenem Werkstückteil oder wenn noch keine trennende Bearbeitung am Werkstückteil erfolgt ist. Eine Modifikation des Werkstücks erfolgt entlang der Modifikationslinie, wobei insbesondere dann, wenn der Laserstrahl auch quer zur Modifikationslinie bewegt wird, die Modifikation des Werkstücks in einer relativ breiten Modifikationszone erfolgt. Es versteht sich, dass sich die Modifikationszone auch entlang der Modifikationslinie erstreckt.

Wie die Erzeugung des Schnittspalts kann auch die Modifikation des Werkstücks abschnittsweise erfolgen, d.h. die Modifikation kann nacheinander, beispielsweise getrennt durch eine trennende Bearbeitung des Werkstücks, in mehreren Abschnitten erfolgen. Eine Modifikation des Werkstücks kann auch in einem Bereich des Werkstücks entlang der Modifikationslinie erfolgen, der keinen Schnittspalt aufweist, insbesondere im Bereich eines oder mehrerer Stege.

Der Laserstrahl hat beim Modifizieren des Werkstücks eine Leistungsdichte, die kleiner ist als die zur trennenden Bearbeitung des Werkstücks eingesetzte Leistungsdichte. Dies heißt, falls bereits ein Schnittspalt erzeugt wurde, wird beim Modifizieren des Werkstücks das teilweise ausgeschnittene Werkstückteil nicht über den Schnittspalt hinweg wieder mit dem Restwerkstück verbunden. Gleichermaßen wird beim Modifizieren des Werkstücks keine Durchbrechung des Werkstücks erzeugt.

Gemäß einer Ausgestaltung des erfindungsgemäßen Prozesses werden mindestens zwei Abschnitte, vorzugsweise mehrere Abschnitte, des Schnittspalts erzeugt. Die trennende Bearbeitung des Werkstücks wird somit wenigstens einmal unterbrochen, wobei vorzugsweise wenigstens ein Steg zwischen Werkstückteil und Restwerkstück verbleibt. Bevorzugt weist ein zuletzt erzeugter Abschnitt des Schnittspalts eine sich entlang der Schnittlinie bemessende Länge auf, die kleiner ist als die jeweilige Länge eines jeden anderen zuvor erzeugten Abschnitts des Schnittspalts. Beispielsweise nehmen die Längen der aufeinanderfolgend erzeugten Abschnitte des Schnittspalts, von einem Freischneidpunkt des Werkstückteils aus betrachtet, entgegen der Erzeugungsrichtung des Schnittspalts nicht ab. Da eine Modifikation des Werkstücks nur dann erfolgt, wenn das Werkstückteil noch mit dem Werkstück fest verbunden ist, kann durch diese Maßnahme in besonders vorteilhafter Weise erreicht werden, dass das Werkstück entlang eines möglichst großen Teils der Schnittlinie modifiziert werden kann. Ein nicht modifizierter Teil des Werkstücks, mit dem das teilweise ausgeschnittene Werkstückteil noch mit dem Werkstück verbunden ist, ist somit klein im Vergleich zum modifizierten Teil. Alternativ wird das Werkstück auch dort entlang der Modifikationslinie modifiziert, wo sich kein Schnittspalt befindet.

Eine Modifikation des Werkstücks kann in einem Bereich erfolgen, der die werkstückteilseitige Schnittkante und/oder die restwerkstückseitige Schnittkante des Schnittspalts enthält, wobei es gleichermaßen möglich ist, dass die werkstückteilseitige Schnittkante und/oder die restwerkstückseitige Schnittkante des Schnittspalts nicht enthalten sind. Beispielsweise erfolgt eine erstmalige Modifikation des Werkstücks in einer Modifikationszone, welche die werkstückteilseitige Schnittkante und/oder die restwerkstückseitige Schnittkante des Schnittspalts enthält und jede weitere Modifikation enthält die Schnittkanten nicht mehr. Diese Ausgestaltung ist insbesondere bei der Erzeugung einer Fase am Schnittspalt vorteilhaft, wobei bei einer nachfolgenden Modifikation der Laserstrahl in Richtung weg von der Schnittkante weiter in das Werkstückteil bzw. Restwerkstück hinein versetzt werden kann, beispielsweise um die Fase zu verbreitern. Bei einer mehrmaligen Modifikation kann eine Modifikationszone einer nachfolgenden Modifikation wenigstens teilweise eine Modifikationszone einer vorangehenden Modifikation enthalten.

Werden mehrere Modifikationen durchgeführt, können gleiche oder verschiedene Modifikationslinien und/oder gleiche oder verschiedene Leistungsdichten des Laserstrahls eingesetzt werden. Die Bewegungsrichtung des Laserstrahls zur Modifikation des Werkstücks kann der Bewegungsrichtung des Laserstrahls zur Erzeugung des Schnittspalts entsprechen oder auch hierzu entgegengesetzt sein.

Gemäß einer Ausgestaltung des erfindungsgemäßen Verfahrens beträgt der Abstand der Modifikationslinie von der Schnittlinie maximal die halbe Spaltbreite des Schnittspalts zuzüglich des Radius eines Strahlkegels des Laserstrahls an der Werkstückoberfläche. Möglich ist jedoch auch, dass der Abstand der Modifikationslinie von der Schnittlinie größer ist, beispielsweise bei einer mehrstufigen Herstellung einer Fase, bei der die Modifikationslinie bei einer nachfolgenden Modifikation weiter weg vom Schnittspalt angeordnet ist als die Modifikationslinie einer vorhergehenden Modifikation. Bei einer mehrstufigen Erzeugung einer Fase enthält die Modifikationszone bei einer erstmaligen Modifikation zumindest eine Schnittkante, wobei die Modifikationszonen bei einer nachfolgenden Modifikation die Schnittkante nicht mehr enthält.

Bei der Modifikation des Werkstücks hat der Laserstrahl eine Leistungsdichte, welche so bemessen ist, dass eine nicht-fügende und zugleich nicht-trennende (jedoch gegebenenfalls umschmelzende) Modifikation des Werkstücks bewirkt wird. Es wird bei der Modifikation also weder eine Verbindung zwischen dem teilweise ausgeschnittenen Werkstückteil und dem Restwerkstück über den Schnittspalt hinweg erzeugt, noch wird das Werkstück durchtrennt. Hierbei wird der Einfluss des Prozessgases berücksichtigt, wobei unter Leistungsdichte des Laserstrahls auch die vom Werkstück absorbierte Leistungsdichte verstanden werden kann. Eine Änderung der Leistungsdichte bzw. der absorbierten Leistungsdichte kann durch verschiedene Maßnahmen erreicht werden, insbesondere durch Ändern der Energie des Laserstrahls, Ändern des Strahlfokus, Ändern des Abstands der Düse von der Werkstückoberfläche, Ändern der Art und/oder von Parametern des Prozessgases und dergleichen mehr. Dem Fachmann sind die Maßnahmen zum Ändern der Leistungsdichte wohlbekannt, so dass hier nicht näher darauf eingegangen werden muss. Vorteilhaft wird die Leistungsdichte ausschließlich durch Ändern des senkrechten Abstands der Düse von der Werkstückoberfläche geändert. Beispielsweise beträgt die Leistungsdichte bei einer Modifikation des Werkstücks weniger als 50%, weniger als 40%, weniger als 30%, weniger als 20%, weniger als 10% oder weniger als 1% der Leistungsdichte beim Trennvorgang.

### Kurze Beschreibung der Zeichnungen

Die Erfindung wird nun anhand von Ausführungsbeispielen näher erläutert, wobei Bezug auf die beigefügten Figuren genommen wird. Es zeigen:
- Fig. 1: eine schematische Darstellung einer beispielhaften Laserbearbeitungsvorrichtung zur Ausführung des erfindungsgemäßen Verfahrens;
- Fig. 2-16: ein beispielhaftes Verfahren zur Laserbearbeitung eines Werkstücks gemäß der Erfindung
- Fig. 17-18: ein weiteres beispielhaftes Verfahren zur Laserbearbeitung eines Werkstücks gemäß der Erfindung
- Fig. 19-22: verschiedene Ausgestaltungen einer nicht-geradlinigen Bewegung des Laserstrahls entlang der Modifikationslinie;
- Fig. 23-31: verschiedene Ausgestaltungen der Modifikation eines Werkstücks;
- Fig. 32-36: ein weiteres beispielhaftes Verfahren zur Laserbearbeitung eines Werkstücks, welches außerhalb des Schutzumfanges der Ansprüche liegt.

- Fig. 37: ein Flussdiagramm des erfindungsgemäßen Verfahrens.

### Ausführliche Beschreibung der Zeichnungen

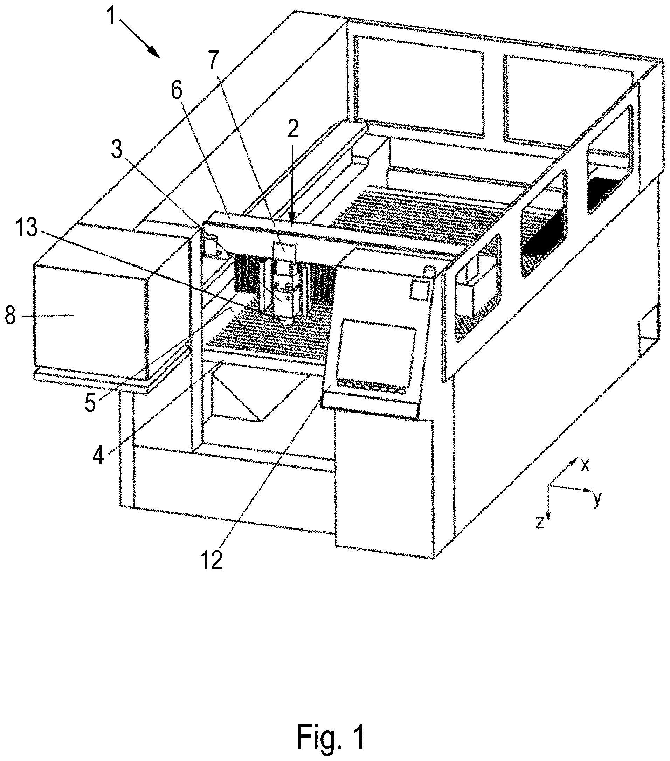

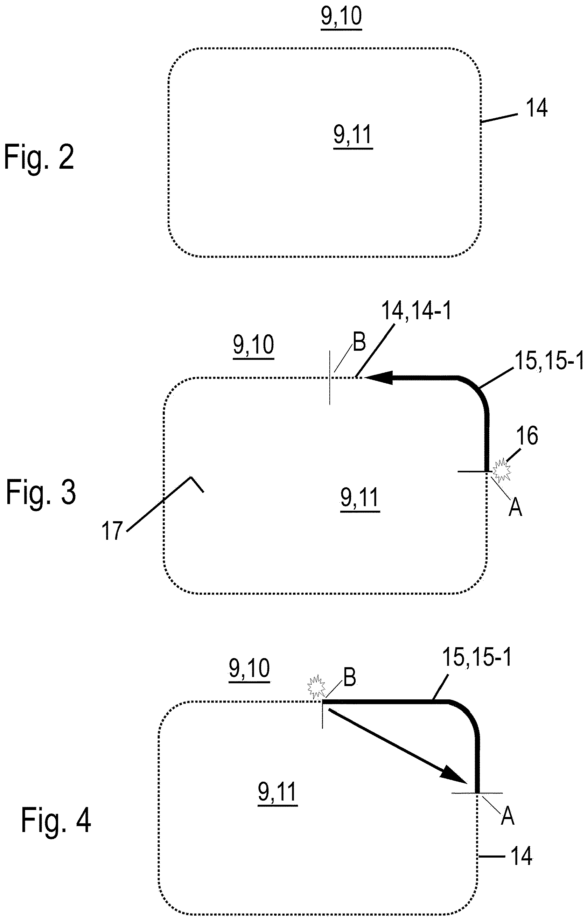

Sei zunächst Figur 1 betrachtet, worin eine an sich bekannte Laserbearbeitungsvorrichtung zum Laserschneiden von plattenartigen Werkstücken veranschaulicht ist. Die insgesamt mit der Bezugszahl 1 bezeichnete Laserbearbeitungsvorrichtung umfasst eine Laserschneideinrichtung 2 mit einem Laserbearbeitungskopf 3, sowie einen Arbeitstisch 4 mit einer ebenen Werkstückauflage 5 für ein Werkstück 9 (nicht gezeigt in Figur 1, siehe z.B. Figuren 2 bis 16), beispielsweise eine ebene Blechtafel.

Die Werkstückauflage 5 wird von einem Querträger 6 überspannt, der entlang einer ersten Achsrichtung (x-Richtung) verfahrbar geführt ist. Am Querträger 6 ist ein Führungsschlitten 7 für den Laserbearbeitungskopf 3 montiert, der am Querträger 6 entlang einer zur ersten Achsrichtung senkrechten zweiten Achsrichtung (y-Richtung) verfahrbar geführt ist. Der Laserbearbeitungskopf 3 kann somit in einer durch die beiden Achsrichtungen (x-, y-Richtung) aufgespannten Ebene parallel und relativ zur beispielsweise horizontalen Werkstückauflage 5 verfahren werden. Der Laserbearbeitungskopf 3 ist weiterhin in einer zur ersten und zweiten Achsrichtung senkrechten, dritten Achsrichtung (z-Richtung) höhenverfahrbar ausgebildet, wodurch der Abstand senkrecht zur Werkstückauflage 5 bzw. Werkstück 9 verändert werden kann. Bei einer horizontalen Werkstückauflage 5 entspricht die z-Richtung der Schwerkraftrichtung.

Der Laserbearbeitungskopf 3 weist auf seiner der Werkstückauflage 5 zugewandten Seite eine sich zur Werkstückauflage 5 hin kegelförmig verjüngende Düse 13 auf. Der Laserbearbeitungskopf 3 dient zum Führen eines Laserstrahls 16 (siehe z.B. Figuren 2 bis 16), sowie eines Prozessgasstrahls (nicht dargestellt in den Figuren). Der Laserstrahl 16 wird von einer Laserstrahlquelle 8 erzeugt und beispielsweise durch ein Strahlführungsrohr und mehrere Umlenkspiegel oder ein Lichtleitkabel zum Laserbearbeitungskopf 3 geführt. Über eine Fokussierlinse oder adaptive Optik kann der Laserstrahl 16 in gebündelter Form (d.h. fokussiert) auf das Werkstück 9 gerichtet werden. Aufgrund der Verfahrbarkeit des Laserbearbeitungskopfs 3 entlang der ersten Achsrichtung (x-Richtung) und zweiten Achsrichtung (y-Richtung) kann mit dem Laserstrahl 16 jeder beliebige Punkt am Werkstück 9 angefahren werden.

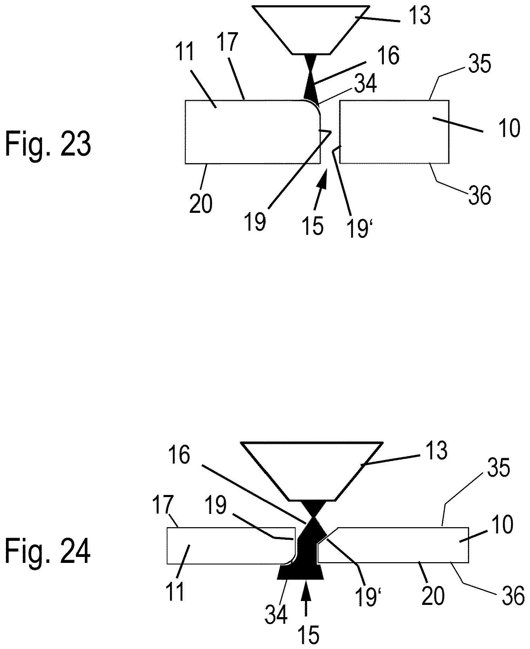

Das Werkstück 9 weist zwei einander gegenüberliegende Werkstückoberflächen 17, 20 auf (siehe z.B. Figur 23), wobei eine erste Werkstückoberfläche 17 an einer Werkstückoberseite 35 der Düse 13 zugewandt und eine zweite Werkstückoberfläche 20 an einer Werkstückunterseite 36 von der Düse 13 abgewandt ist. Durch die Höhenverfahrbarkeit des Laserbearbeitungskopfs 3 in z-Richtung kann über eine Änderung des Abstands zur oberseitigen Werkstückoberfläche 17 der (Arbeits-)Abstand der Düse 13 zum Werkstück 9 eingestellt werden. Der Abstand des Laserbearbeitungskopfes 3 von der oberseitigen Werkstückoberfläche 17 kann vor, während und nach der Laserbearbeitung eingestellt werden. Die Fokuslage des Laserstrahls 16 kann durch eine Änderung des Abstands der Düse 13 von der oberseitigen Werkstückoberfläche 17 und/oder über optische Elemente im Laserbearbeitungskopf 3, beispielsweise eine adaptive Optik, eingestellt werden.

Ein Prozessgas dient dazu, die Schmelze aus der Schnittfuge zu treiben. Das Prozessgas wird von einer nicht dargestellten Gasstrahlerzeugungseinrichtung erzeugt. Als inertes Arbeitsgas wird beispielsweise Helium (He), Argon (Ar) oder Stickstoff (N₂) eingesetzt. Als reaktives Arbeitsgas wird üblicherweise Sauerstoff (O₂) verwendet. Bekannt ist auch die Verwendung von Gasgemischen. Das Prozessgas weist innerhalb des Laserbearbeitungskopfs 3 einen vorgegebenen Schneidgasdruck (Kesseldruck) auf, tritt mit diesem Druck aus der Düse 13 aus und wird koaxial zum Laserstrahl 16 an die Bearbeitungsstelle geführt.

Wie in Figur 1 gezeigt, besteht die ebene Werkstückauflage 5 beispielsweise aus einer Vielzahl von Auflageelementen mit beispielsweise dreieckig ausgebildeten Tragpunktspitzen, welche gemeinsam eine Auflageebene für das zu bearbeitende Werkstück 9 definieren. Die Auflageelemente sind hier beispielsweise als längliche Auflagestege ausgeführt, die sich jeweils entlang der y-Richtung erstrecken und mit einem beispielsweise konstanten Zwischenabstand in paralleler Anordnung entlang der x-Richtung nebeneinander liegend angeordnet sind. Nicht näher dargestellt ist eine Absaugeinrichtung, durch welche während des Laserschneidens entstehender Schneidrauch, Schlackepartikel und kleine Abfallteile abgesaugt werden können.

Eine programmgesteuerte Steuereinrichtung 12 dient zur Steuerung/Regelung des erfindungsgemäßen Verfahrens zur Laserbearbeitung des Werkstücks 9 in der Laserbearbeitungsvorrichtung 1.

Es wird nun Bezug auf die Figuren 2 bis 16 genommen, worin beispielhafte Ausgestaltungen des erfindungsgemäßen Verfahrens zur Laserbearbeitung eines Werkstücks 9 gemäß der Erfindung (d.h. Schritt a) wird vor Schritt b) ausgeführt) veranschaulicht sind. Die Figuren 2 bis 16 entsprechen in dieser Reihenfolge jeweils späteren Verfahrenssituationen.

Sei zunächst Figur 2 betrachtet, in der eine Schnittlinie 14 (gestrichelt) gezeigt ist. Die Schnittlinie 14 ist eine gedachte Linie, welche der Kontur eines aus dem Werkstück 9 herzustellenden Werkstückteils 11 entspricht. Die Kontur gibt die äußere Form des Werkstückteils 11 wieder. Das Werkstückteil 11 soll aus dem nicht näher dargestellten platten- oder rohrförmigen Werkstück 9 vollständig ausgeschnitten werden, wobei das Restwerkstück 10 verbleibt. Das Werkstückteil 11 hat hier beispielsweise eine Rechteckform mit gerundeten Ecken, wobei es sich versteht, dass das Werkstückteil 11 jede beliebige Form aufweisen kann.

In Figur 3 ist der aus dem Laserbearbeitungskopf 3 austretende Laserstrahl 16 schematisch veranschaulicht. Der Laserstrahl 16 wird entlang der Schnittlinie 14 geführt, wobei bei entsprechender Leistungsdichte auf dem Werkstück 9 ein Schnittspalt 15 im Werkstück 9 erzeugt wird. Der Laserbearbeitungskopf 3 ist zu diesem Zweck in eine Position über der Schnittlinie 14 verfahren worden, in der der Laserstrahl 16 auf eine Schneidposition A der Schnittlinie 14 trifft. Wie in Figur 3 veranschaulicht, wird der Laserbearbeitungskopf 3 entlang der Schnittlinie 14 verfahren, wobei der Laserstrahl 16 von der Schneidposition A zu einer Schneidposition B bewegt wird. Hierdurch wird ein das Werkstück 9 durchtrennender Schnittspalt 15 (durchgezogene Linie) von der Schneidposition Azur Schneidposition B erzeugt.

Wie sich aus den weiteren Ausführungen ergibt, wird der Schnittspalt 15 abschnittsweise erzeugt, wobei zunächst ein erster Abschnitt 15-1 des Schnittspalts 15 erzeugt wird. Der erste Abschnitt 15-1 des Schnittspalts 15 wird entsprechend in einem ersten Abschnitt 14-1 der Schnittlinie 14 erzeugt. Der Laserstrahl 16 kann auch entfernt von der Schnittlinie 14 in das Werkstück 9 einstechen, wobei sich der Schnittspalt 15 im Sinne vorliegender Erfindung nur entlang der Kontur (d.h. Schnittlinie 14) des Werkstückteils 11 erstreckt.

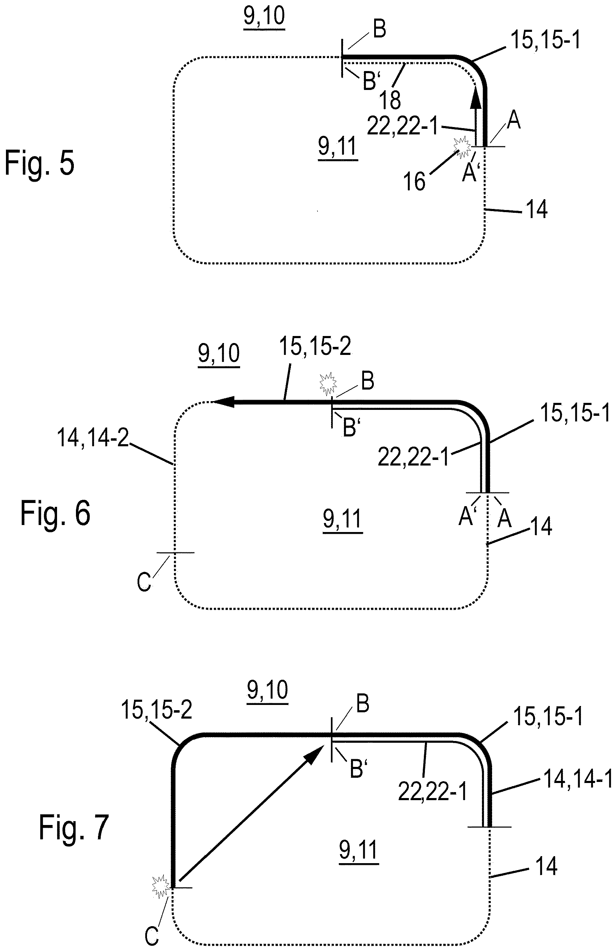

In Figur 4 ist eine Situation veranschaulicht, in der der erste Abschnitt 15-1 des Schnittspalts 15 von der Schneidposition A bis zur Schneidposition B vollständig erzeugt wurde. Die trennende Bearbeitung des Werkstücks 9 wird nun unterbrochen. Der Laserstrahl 16 wird abgeschaltet und der Laserbearbeitungskopf 3 wird in eine Modifikationsposition A' nahe der Schneidposition A verfahren. Wie in Figur 4 durch einen Pfeil veranschaulicht, erfolgt die Verfahrbewegung des Laserbearbeitungskopfes 3 z.B. in direkter Linie zwischen der Schneidposition B und der Modifikationsposition A'. Die Modifikationsposition A' liegt auf einer Modifikationslinie 18 (siehe Figur 5).

Wie in Figur 5 und den weiteren Figuren 6 bis 16 dargestellt, ist die Modifikationslinie 18 seitlich versetzt und äquidistant zur Schnittlinie 14 angeordnet. Der Laserbearbeitungskopf 3 wird bei der Modifikation des Werkstücks 9 entlang der Modifikationslinie 18 verfahren, wobei die Verfahrbewegung des Laserbearbeitungskopfs 3 geradlinig oder auch nicht-geradlinig entlang der Modifikationslinie 18 sein kann, wie weiter unten näher erläutert wird. Eine Modifikation des Werkstücks 9 erfolgt in einer Modifikationszone 22, die typischerweise eine breitere Abmessung senkrecht zu deren Erstreckung hat als die Modifikationslinie 18, was zeichnerisch nicht dargestellt ist. Die Modifikationszone 22 ist als jener Bereich des Werkstücks 9 zu verstehen, der durch die Laserbestrahlung modifiziert wird. Entsprechend der Modifikationslinie 18 erstreckt sich auch die Modifikationszone 22 entlang der Schnittlinie 14. Der Schnittspalt 15 wird durch zwei einander gegenüberliegende Schnittkanten 19, 19' begrenzt (siehe z.B. Figur 23).

Wie in Figur 5 veranschaulicht, wird der Laserstrahl 16 dann wieder angeschaltet und der Laserbearbeitungskopf 3 entlang der Modifikationslinie 18 (gestrichelte Linie) verfahren, wobei der Laserstrahl 16 von der ersten Modifikationsposition A' zu einer zweiten Modifikationsposition B' nahe der Schneidposition B verfahren wird. Hierbei erfolgt eine Modifikation des Werkstücks 9 in einem ersten Abschnitt 22-1 der Modifikationszone 22.

In Figur 6 ist eine Situation gezeigt, in der das Werkstück 9 entlang des kompletten ersten Abschnitts 15-1 des Schnittspalts 15 modifiziert wurde. Der modifizierte Bereich bzw. der erste Abschnitt 22-1 der Modifikationszone 22 ist mit einer durchgezogenen Linie schematisch veranschaulicht. Analog zur abschnittsweisen Erzeugung des Schnittspalts 15 wird auch die Modifikationszone 22 abschnittsweise erzeugt.

Wie in Figur 6 veranschaulicht, wird, nun ausgehend von der Schneidposition B, das Werkstück 9 weiter trennend bearbeitet, wobei der bereits erzeugte erste Abschnitt 15-1 des Schnittspalts 15 bis zu einer Schneidposition C verlängert wird.

In Figur 7 ist eine Situation veranschaulicht, in der ein weiterer bzw. zweiter Abschnitt 15-2 des Schnittspalts 15 von der Schneidposition B zur Schneidposition C entlang eines zweiten Abschnitts 14-2 der Schnittlinie 14 erzeugt wurde. Die trennende Bearbeitung des Werkstücks 9 wird nun unterbrochen. Der Laserstrahl 16 wird abgeschaltet und der Laserbearbeitungskopf 3 wird in gerader Linie in eine Position über der Modifikationsposition B' verfahren, wie durch einen Pfeil veranschaulicht ist.

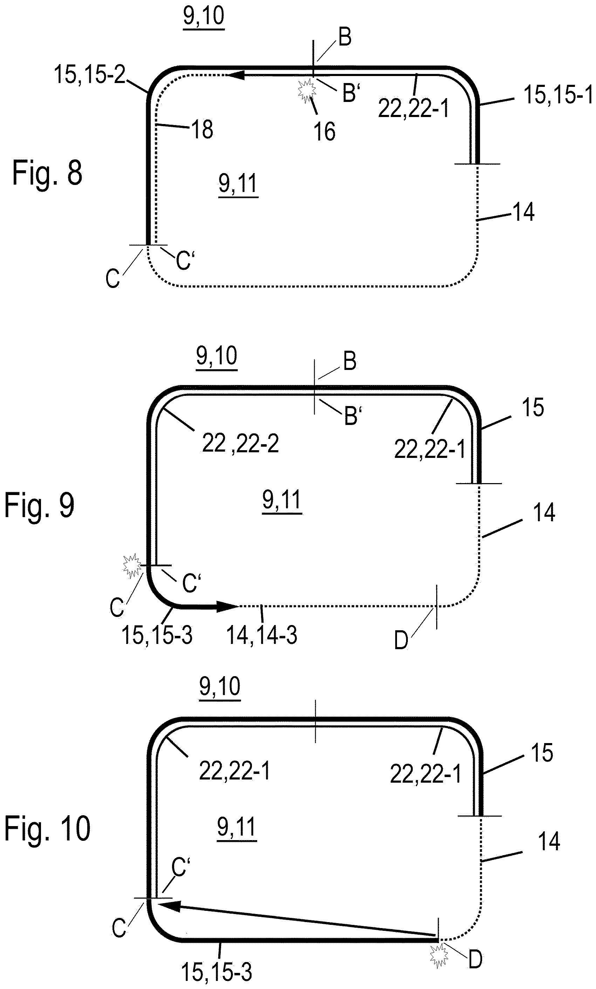

Wie in Figur 8 veranschaulicht, wird der Laserstrahl 16 nun wieder angeschaltet und der Laserbearbeitungskopf 3 entlang der Modifikationslinie 18 verfahren, wobei der Laserstrahl 16 von der Modifikationsposition B' zu einer Modifikationsposition C' nahe der Schneidposition C verfahren wird.

In Figur 9 ist eine Situation gezeigt, in der das Werkstück 9 entlang des kompletten zweiten Abschnitts 15-2 des Schnittspalts 15 zwischen der Modifikationsposition B' und der Modifikationsposition C' in einem weiteren bzw. zweiten Abschnitt 22-2 der Modifikationszone 22 modifiziert wurde. Der zweite Abschnitt 22-2 der Modifikationszone 22 verlängert den zuvor erzeugten ersten Abschnitt 22-1 der Modifikationszone 22.

Wie in Figur 9 veranschaulicht, wird anschließend, ausgehend von der Schneidposition C, das Werkstück 9 weiter trennend bearbeitet, wobei der bereits erzeugte Teil des Schnittspalts 15 bis zu einer Schneidposition D verlängert wird.

In Figur 10 ist eine Situation veranschaulicht, in der ein dritter Abschnitt 15-3 des Schnittspalts 15 von der Schneidposition C zur Schneidposition D entlang eines dritten Abschnitts 14-3 der Schnittlinie 14 erzeugt wurde. Die trennende Bearbeitung des Werkstücks 9 wird nun unterbrochen. Der Laserstrahl 16 wird abgeschaltet und der Laserbearbeitungskopf 3 wird in eine Position über der Modifikationsposition C' der Modifikationslinie 18 für die nun folgende Modifikation verfahren. Der dritte Abschnitt 15-3 des Schnittspalts 15 verlängert den zweiten Abschnitt 15-2 des Schnittspalts 15.

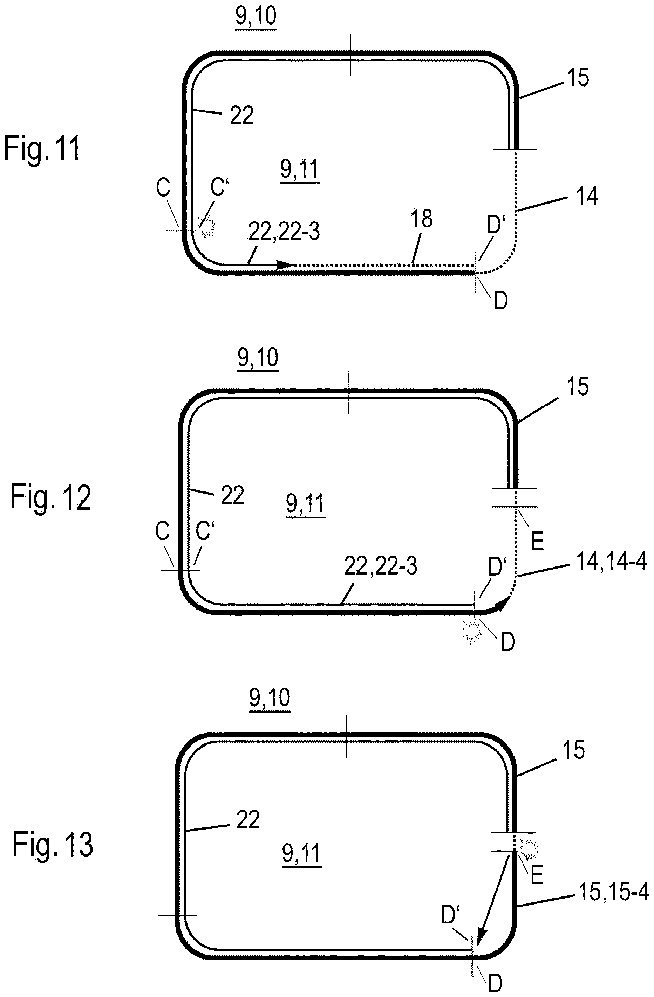

Wie in Figur 11 veranschaulicht, wird der Laserstrahl 16 nun wieder angeschaltet und der Laserbearbeitungskopf 3 entlang der Modifikationslinie 18 verfahren, wobei der Laserstrahl 16 von der Modifikationsposition C' zu einer Modifikationsposition D' nahe der Schneidposition D verfahren wird.

In Figur 12 ist eine Situation gezeigt, in der das Werkstück 9 entlang des kompletten dritten Abschnitts 15-3 des Schnittspalts 15 von der Modifikationsposition C' bis zur Modifikationsposition D' in einem dritten Abschnitt 22-3 der Modifikationszone 22 modifiziert wurde. Der dritte Abschnitt 22-3 der Modifikationszone 22 verlängert den zuvor erzeugten zweiten Abschnitt 22-2 der Modifikationszone 22.

Wie in Figur 12 veranschaulicht, wird, ausgehend von der Schneidposition D, das Werkstück 9 nun weiter trennend bearbeitet, wobei der bereits erzeugte Teil des Schnittspalts 15 bis zu einer Schneidposition E verlängert wird.

In Figur 13 ist eine Situation veranschaulicht, in der ein vierter Abschnitt 15-4 des Schnittspalts 15 von der Schneidposition D zur Schneidposition E entlang eines vierten Abschnitts 14-4 der Schnittlinie 14 erzeugt wurde. Die trennende Bearbeitung des Werkstücks 9 wird unterbrochen. Der vierte Abschnitt 15-4 des Schnittspalts 15 verlängert den dritten Abschnitt 15-3 des Schnittspalts 15.

Der Laserstrahl 16 wird nun abgeschaltet und der Laserbearbeitungskopf 3 wird in eine Position über der Modifikationsposition D' der Modifikationslinie 18 für die folgende Modifikation verfahren.

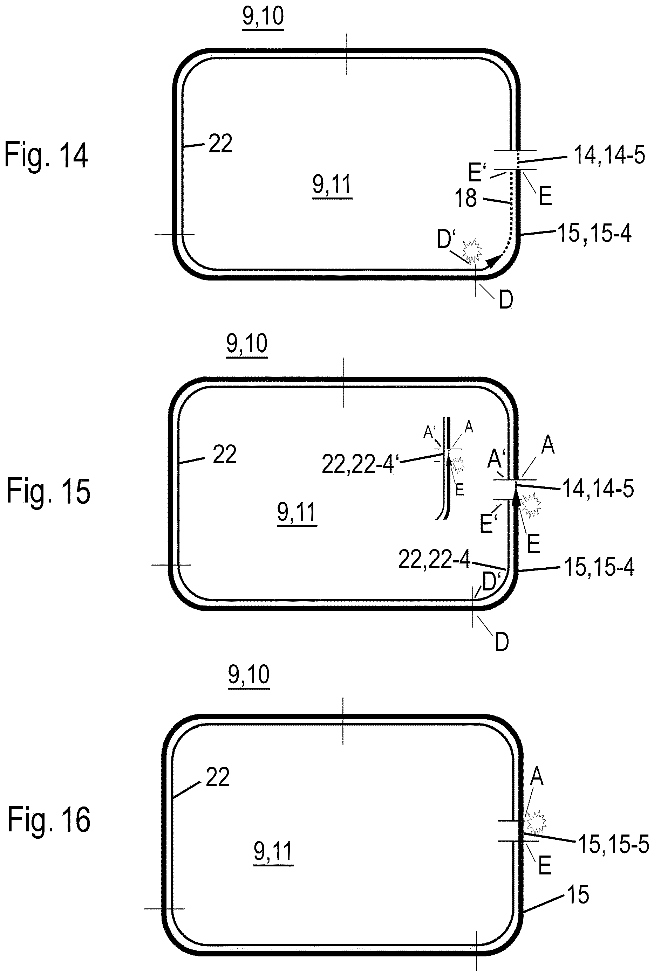

Wie in Figur 14 veranschaulicht, wird der Laserstrahl 16 wieder angeschaltet und der Laserbearbeitungskopf 3 entlang der Modifikationslinie 18 verfahren, wobei der Laserstrahl 16 von der Modifikationsposition D' zu einer Modifikationsposition E' nahe der Schneidposition E verfahren wird.

In Figur 15 ist eine Situation gezeigt, in der das Werkstück 9 entlang des kompletten vierten Abschnitts 15-4 des Schnittspalts 15 von der Modifikationsposition D' bis zur Modifikationsposition E' in einem vierten Abschnitt 22-4 der Modifikationszone 22 modifiziert wurde. Der vierte Abschnitt 22-4 der Modifikationszone 22 verlängert den zuvor erzeugten dritten Abschnitt 22-3 der Modifikationszone 22.

Wie in Figur 15 veranschaulicht, wird anschließend, ausgehend von der Schneidposition E, das Werkstück 9 weiter trennend bearbeitet, wobei der bereits erzeugte Teil des Schnittspalts 15 entlang eines fünften Abschnitts 14-5 der Schnittlinie 14 bis zur Schneidposition A verlängert wird. Hierdurch wird der Schnittspalt 15 geschlossen und das Werkstückteil 11 vom Restwerkstück 10 freigeschnitten, so dass es entfernt werden kann. Es erfolgt keine weitere Modifikation des freigeschnittenen Werkstückteils 11, da am freigeschnittenen Werkstückteil 11 durch das erfindungsgemäße Verfahren keine Modifikation erfolgt. Hierbei wird ein fünfter Abschnitt 15-5 des Schnittspalts 15 erzeugt, der den vierten Abschnitt 15-4 des Schnittspalts 15 verlängert.

Bei allen trennenden Bearbeitungen hat der Laserstrahl 16 eine Leistungsdichte, die so bemessen ist, dass das Werkstück 9 durchtrennt wird. Bei allen Modifikationen hat der Laserstrahl 16 eine Leistungsdichte, die so bemessen ist, dass das Werkstück 9 weder fügend noch trennend bearbeitet wird. Hierdurch wird das Werkstück 9 entlang der Schnittlinie 14 modifiziert. Die Strahlachse des Laserstrahls 16 ist beispielsweise achsparallel zur konischen Düse 13 und trifft senkrecht auf das Werkstück 9. Bei allen trennenden Bearbeitungen sowie bei allen Modifikationen wird der Laserstrahl 16 mit einer unveränderten senkrechten Ausrichtung seiner Strahlachse relativ zur Werkstückoberfläche 17 auf die Werkstückoberfläche 17 gerichtet.

Die Modifikationen können in vielfältiger Weise variiert werden. Beispielsweise könnten die Modifikationspositionen auch so positioniert sein, dass das Werkstück 9 nur entlang eines Teils des jeweiligen Abschnitts 14-1 bis 14-5 der Schnittlinie 14 oder eines Teils des jeweiligen Abschnitts 15-1 bis 15-5 des Schnittspalts 15 modifiziert wird, d.h. die jeweiligen Abschnitte 22-1 bis 22-4 der Modifikationszone 22 erstrecken sich nicht über die komplette Länge der zugehörigen Abschnitte 14-1 bis 14-5 der Schnittlinie 14 oder nicht über die komplette Länge der zugehörigen Abschnitte 15-1 bis 15-5 des Schnittspalts 15. Beispielsweise könnte die Richtung zur Erzeugung der Modifikation auch entgegengesetzt zur Richtung der Erzeugung des Schnittspalts 15 sein.

Gemäß einer Ausgestaltung des Verfahrens kann ein jeweiliger Abschnitt 14-1 bis 14-5 der Schnittlinie 14 nur einer einzigen Modifikation unterzogen werden. Möglich ist jedoch auch, dass mehrere Modifikationen für einen selben Teil bzw. Abschnitt 14-1 bis 14-5 der Schnittlinie 14 durchgeführt werden.

Wie insbesondere aus Figur 16 ersichtlich ist, wird bei der letzten (fünften) Trennprozedur ein Teil bzw. Abschnitt 15-5 des Schnittspalts 15 erzeugt, dessen Länge kleiner ist als die jeweiligen Längen der bei allen vorhergehenden Trennvorgängen erzeugten Abschnitte des Schnittspalts 15. Durch diese Maßnahme kann in vorteilhafter Weise erreicht werden, dass ein möglichst geringer Teil des Schnittspalts 15 keiner Modifikation unterzogen wird. Möglich wäre auch, dass die Längen der bei den Trennprozeduren erzeugten Teile des Schnittspalts 15, ausgehend vom Freischneidpunkt des Werkstückteils 11, beispielsweise kontinuierlich zunehmen.

Im Hinblick auf eine vollständige Modifikation des Werkstückteils 11 ist die nachfolgende Ausgestaltung des erfindungsgemäßen Verfahrens besonders vorteilhaft. Hierbei wird nach dem Nachbearbeiten des Werkstücks 9 im vierten Abschnitt 22-4 der Modifikationszone 22, jedoch noch vor dem Erzeugen des fünften Abschnitts 15-5 des Schnittspalts 15, also vor dem Freischneiden des Werkstückteils 11, eine Modifikation des Werkstücks 9 entlang eines fünften Abschnitts 14-5 der Schnittlinie 14 zwischen den Modifikationspositionen E' und A' durchgeführt. Dies ist anhand einer Einfügung in Figur 15 schematisch veranschaulicht. Hierbei wird der vierte Abschnitt 22-4 der Modifikationszone 22 bis zur Modifikationsposition A' verlängert. Der verlängerte vierte Abschnitt 22-4' der Modifikationszone 22 erstreckt sich hier demnach bis zur Modifikationsposition A', so dass sich die Modifikationszone 22 als geschlossener, länglicher Bereich vollumfänglich über die komplette Kontur des Werkstückteils 11 erstreckt. Insbesondere kann bei einer solchen Modifikation in vorteilhafter Weise eine Fase an einer oder beiden später zu erzeugenden Schnittkanten des Schnittspalts 15 auch im Bereich des fünften Abschnitts 14-5 der Schnittlinie 14 erzeugt werden. Anschließend wird das Werkstückteil 11 durch Erzeugen des fünften Abschnitts 15-2 des Schnittspalts 15 freigeschnitten.

Es versteht sich, dass die Anzahl der Abschnitte 14-1 bis 14-5 der Schnittlinie 14 bzw. der Abschnitte 15-1 bis 15-5 des Schnittspalts 15 in den Ausgestaltungen der Figuren 2 bis 16 beispielhaft ist und größer oder kleiner sein kann.

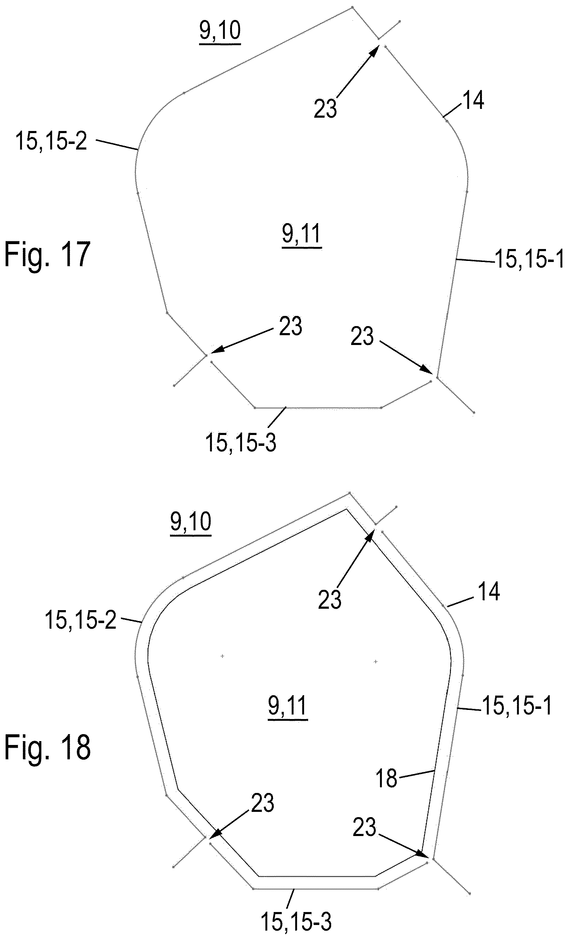

Anhand der Figuren 2 bis 16 wurden beispielhafte Ausgestaltungen des Verfahrens gemäß der Erfindung beschrieben, wobei in einer alternierenden Abfolge jeweils eine trennende Bearbeitung des Werkstücks 9 und anschließend eine Modifikation des Werkstücks 9 erfolgt. Gleichermaßen wäre es auch möglich, dass zunächst verschiedene Abschnitte des Schnittspalts 15 erzeugt werden, die durch Stege, insbesondere Microjoints oder Nanojoints, voneinander getrennt sind, wobei anschließend eine Modifikation des Werkstücks 9 erfolgt. Dies ist anhand der Figuren 17 und 18 veranschaulicht.

Wie in Figur 17 gezeigt, werden gemäß einer weiteren Ausgestaltung des erfindungsgemäßen Verfahrens zunächst drei Abschnitte 15-1, 15-2, 15-3 eines Schnittspalts 15 erzeugt, die durch Stege 23, hier beispielsweise Micro-joints oder Nanojoints, voneinander getrennt sind. Für eine Erzeugung der Abschnitte 15-1, 15-2, 15-3 des Schnittspalts 15 wird der Laserstrahl 16 jeweils entfernt von der Kontur des Werkstückteils 11 eingestochen, zunächst an die Kontur des Werkstückteils 11 geführt und anschließend an der Kontur entlanggeführt. Der Schnittspalt 15 wird entlang einer in Figur 17 nicht näher dargestellten Schnittlinie 14 erzeugt. Es versteht sich, dass eine größere oder kleinere Anzahl von Abschnitten des Schnittspalts 15 entlang der Kontur des Werkstückteils 11 vorgesehen sein kann, wobei die Anzahl der Abschnitte des Schnittspalts 15 der Anzahl der Stege 23 entspricht.

Wie in Figur 18 veranschaulicht, erfolgt nach Erzeugen der Abschnitte 15-1, 15-2, 15-3 des Schnittspalts 15 eine Modifikation des Werkstücks 9, wobei der Laserstrahl 16 entlang einer Modifikationslinie 18 geführt wird. Die Modifikationslinie 18 ist lateral versetzt und äquidistant zur Schnittlinie 14 angeordnet. Die Modifikationslinie 18 erstreckt sich insbesondere auch über die Bereiche der Schnittlinie 14 hinweg, in der ein Steg 23 angeordnet ist, d.h. es erfolgt eine Modifikation des Werkstücks 9 auch im Bereich der Stege 23. Wie Versuche der Erfinder überraschend gezeigt haben, kann bei entsprechend klein dimensionierten Stegen 23 in hinreichender Weise eine Modifikation des Werkstücks 9 erfolgen, da hierdurch die Gasdynamik des Prozessgases nur geringfügig beeinträchtigt wird.

Nach Modifikation des Werkstücks 9 werden die Stege 23 durchtrennt, beispielsweise mittels des Laserstrahls 16 oder manuell und das Werkstückteil 11 wird vom Restwerkstück 10 entfernt. Denkbar ist auch, dass schon durch die Modifikation des Werkstücks 9 im Bereich der Stege 23 die Stege 23 durchtrennt werden, so dass durch die Modifikation gleichzeitig ein Freischneiden des Werkstückteils 11 erfolgt. Dies kann insbesondere dann der Fall sein, wenn die Stege 23 als Nanojoints mit verringerter Höhe ausgebildet sind.

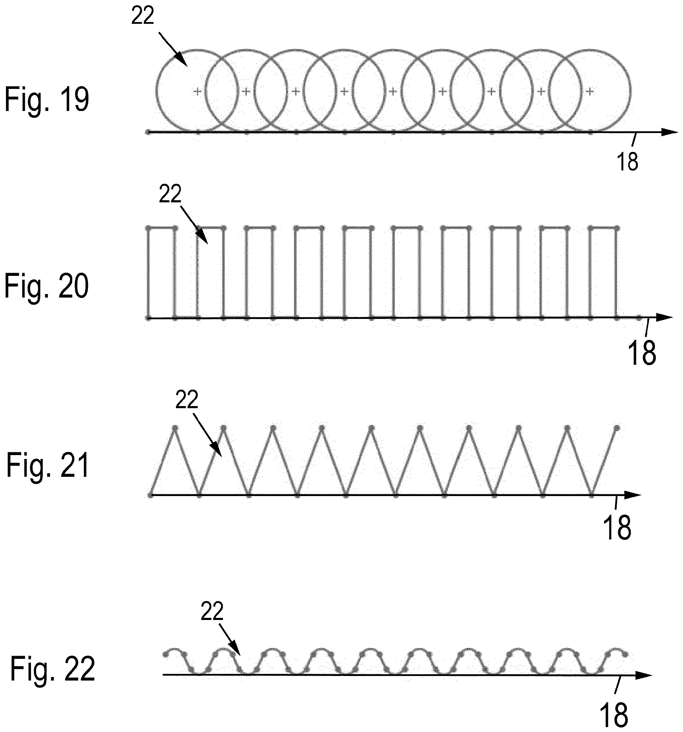

Bei der Erzeugung des Schnittspalts 15 wird der Laserstrahl 16 stets geradlinig entlang der Schnittlinie 14 (Kontur) des Werkstückteils 11 geführt. Bei der Modifikation des Werkstücks 9 wird der Laserstrahl 16 geradlinig oder nicht-geradlinig entlang der Modifikationslinie 18 geführt. Insbesondere kann der Laserstrahl 16 bei der Modifikation des Werkstücks 9 auch Bewegungskomponenten quer (senkrecht) zur Modifikationslinie 18 haben. Dies ist anhand der Figuren 19 bis 22 veranschaulicht.

In den Figuren 19 bis 22 sind verschiedene beispielhafte Ausgestaltungen der Führung des Laserstrahls 16 entlang der Modifikationslinie 18 gezeigt. Für eine einfache zeichnerische Darstellung sei angenommen, dass sich die Modifikationslinie 18 horizontal von links nach rechts erstreckt.

In Figur 19 ist eine Variante veranschaulicht, bei der der Laserstrahl 16 entlang von geschlossenen Kreisen 24 (d.h. geschlossene Bahnabschnitte des Laserstrahls 16), die längs der Modifikationslinie 18 reihenförmig angeordnet sind, geführt wird. Nach Durchfahren eines jeweiligen Kreises 24 wird der Laserstrahl 16 jeweils ein Stück weit geradlinig entlang der Modifikationslinie 18 verfahren und dann entlang des nächsten Kreises 24 geführt. In Richtung der Modifikationslinie 18 überlappen sich die Kreise 24. Anstatt von Kreisen könnte der Laserstrahl 16 auch entlang Ellipsen geführt werden. Die Bewegung des Laserstrahls 16 weist somit Bewegungskomponenten geradlinig entlang der Modifikationslinie 18 und quer zur Modifikationslinie 18 auf. Die Modifikationszone 22, welche sich aus dem durch den Laserstrahl 16 überstrichenen Bereich des Werkstücks 9 ergibt, kann durch diese Maßnahme relativ breit ausgebildet werden, insbesondere zur Erzeugung tiefer und/oder breiter Fasen.

In den Figuren 20 bis 22 sind jeweils Varianten veranschaulicht, bei der der Laserstrahl 16 mäanderförmig mit Hin- und Her-Bewegungen entlang der Modifikationslinie 18 geführt wird. Auch hier umfasst die Bewegung des Laserstrahls 16 Bewegungskomponenten quer zur Modifikationslinie 18. In Figur 20 ist die mäanderförmige Bewegung des Laserstrahls 16 rechteckförmig, in Figur 21 dreieckförmig (sägezahnförmig) und in Figur 22 sinusförmig ausgebildet. Dies ist nur beispielhaft zu verstehen, wobei gleichermaßen auch andere mäanderförmige Bewegungen des Laserstrahls 16 möglich sind. Im Grunde ist erfindungsgemäß jede mäanderförmige Hin- und Herbewegung des Laserstrahls 16, die sich entlang der Modifikationslinie 18 erstreckt, erfindungsgemäß möglich und vorgesehen. Auch durch die mäanderförmige Bewegung des Laserstrahls 16 kann eine relativ breite Modifikationszone 22 erzeugt werden, insbesondere zur Erzeugung besonders tiefer und/oder breiter Fasen.

Es wird nun Bezug auf die Figuren 23 bis 33 genommen, in denen verschiedene Ausgestaltungen für eine Modifikation des Werkstücks 9 veranschaulicht sind.

In Figur 23 wird bei der Modifikation des Werkstücks 9 durch den Laserstrahl 16 die werkstückteilseitige Schnittkante 19 des Werkstückteils 11 angrenzend an die Werkstückoberfläche 17 der Werkstückoberseite 35 durch Umschmelzen verrundet, wobei eine Verrundung 34 erzeugt wird. Die Modifikationslinie 18 ist relativ zur Schnittlinie 14 seitlich (z.B. äquidistant) versetzt angeordnet, wobei bevorzugt ist, wenn ein maximaler Abstand zwischen Modifikationslinie 18 und Schnittlinie 14 die halbe Schnittspaltbreite des Schnittspalts 15 zuzüglich des Radius des Strahlkegels des Laserstrahls 16 an der Werkstückoberfläche 17 beträgt. Dies ist in Figur 23 nicht dargestellt.

In Figur 24 wird bei der Modifikation des Werkstücks 9 durch den Laserstrahl 16 gleichzeitig die werkstückteilseitige Schnittkante 19 angrenzend an die Werkstückoberfläche 20 an der Werkstückunterseite 36 verrundet, wobei eine Verrundung 34 erzeugt wird, und die restwerkstückseitige Schnittkante 19' angrenzend an die Werkstückoberfläche 17 geglättet. Die Modifikationslinie 18 ist relativ zur Schnittlinie 14 seitlich (z.B. äquidistant) versetzt, was in Figur 24 nicht dargestellt ist.

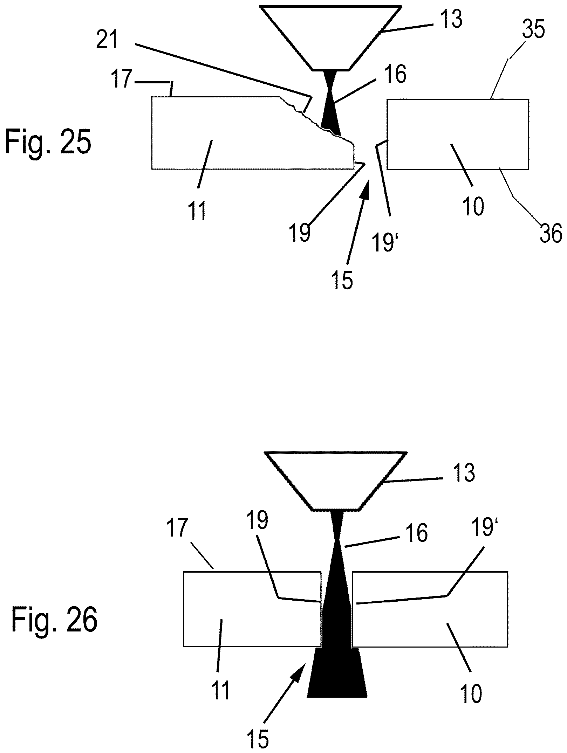

In Figur 25 wird bei der Modifikation des Werkstücks 9 durch den Laserstrahl 16 die werkstückteilseitige Schnittkante 19 angrenzend an die oberseitige Werkstückoberfläche 17 mit einer Fase 21 versehen. Die Modifikationslinie 18 ist relativ zur Schnittlinie 14 seitlich (z.B. äquidistant) versetzt, was in Figur 25 nicht dargestellt ist. Hier erfolgt die Erzeugung der Fase 21 beispielsweise durch mehrere Schritte bzw. Modifikationen, die am selben Abschnitt des Schnittspalts 15 durchgeführt werden. Bei einer ersten Modifikation wird das Werkstückteil 11 in einem die werkstückteilseitige Schnittkante 19 enthaltenden Bereich bestrahlt. Die Modifikationslinie 18 ist relativ zur Schnittlinie 14 seitlich (z.B. äquidistant) versetzt in Richtung zum Werkstückteil 11. Dies kann gegebenenfalls ein- oder mehrmals wiederholt werden, um die Fase 21 weiter weg von der werkstückteilseitigen Schnittkante 19 auszubilden. Hierbei wird die werkstückteilseitige Schnittkante 19 nicht mehr mitbestrahlt. Denkbar wäre auch, zunächst das Werkstückteil 11 so zu bestrahlen, dass ein nicht die werkstückteilseitige Schnittkante 19 enthaltender Bereich bestrahlt wird, gefolgt von einem stetigen Versetzen der Modifikationslinie 18 in Richtung des Schnittspalts 15, wobei schließlich die werkstückteilseitige Schnittkante 19 mitbestrahlt wird. Besonders vorteilhaft wird der Laserstrahl 16 bei der Erzeugung der Fase 21 entlang der Schnittlinie 14 mäandrierend oder entlang reihenförmig angeordneter Kreise oder Ellipsen bewegt, wie anhand der Figuren 19 bis 22 veranschaulicht ist, wodurch die Breite und/oder Tiefe der Fase 21 erheblich vergrößert werden kann.

In Figur 26 wird bei der Modifikation des Werkstücks 9 durch den Laserstrahl 16 gleichzeitig an der werkstückteilseitigen Schnittkante 19 und an der restwerkstückseitigen Schnittkante 19' angrenzend an die unterseitige Werkstückoberfläche jeweils Grat entfernt. Die Modifikationslinie 18 kann identisch zur Schnittlinie 14 oder hiervon verschieden sein, was in Figur 26 nicht gezeigt ist. Die Fokuslage des Laserstrahl 16 wird so eingestellt, dass die beiden Schnittkanten 19, 19' entsprechend bestrahlt werden.

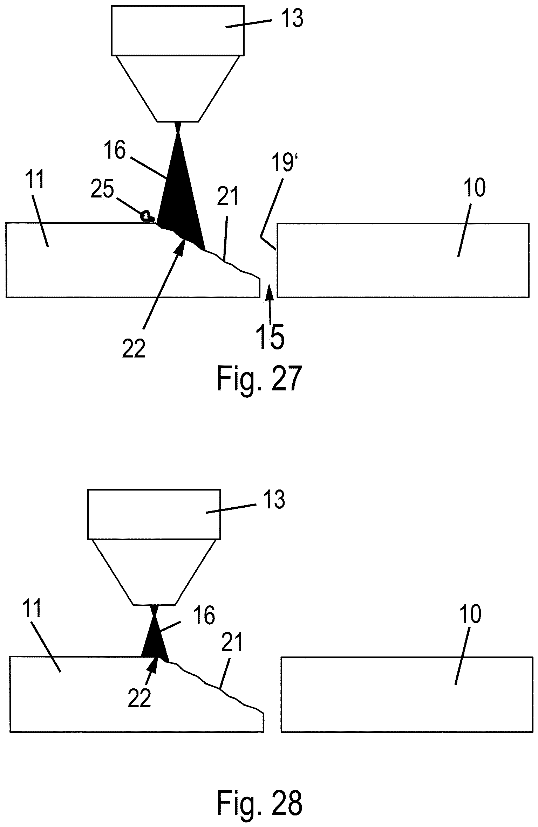

In der Ausgestaltung von Figur 27 wird zunächst ein Schnittspalt 15 erzeugt. Anschließend wird an der werkstückteilseitigen Schnittkante 19 eine Fase 21 erzeugt, wodurch eine Anhaftung in Form von Schlacke 25 gebildet wird. Wie in Figur 28 veranschaulicht, kann die Schlacke 25 durch den Laserstrahl 16 entfernt werden.

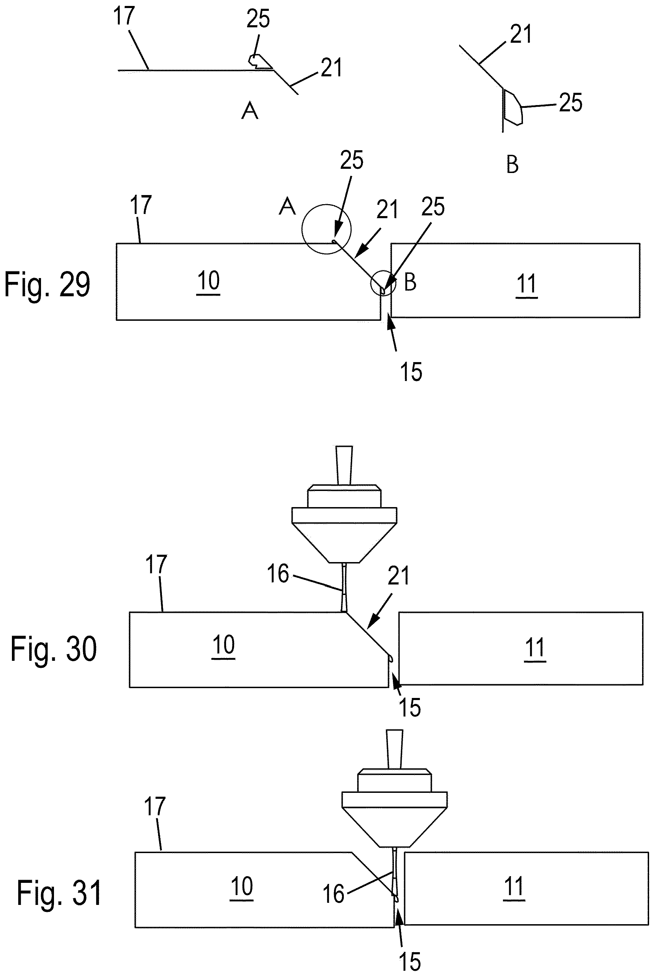

In der Ausgestaltung von Figur 29 wird eine Fase 21 an der werkstückteilseitigen Schnittkante 19 erzeugt, wobei Grat, hier z.B. Schlacke 25, an der Fase 21 an der oberseitigen Werkstückoberfläche 17 und im Schnittspalt 15 erzeugt wird. Die Schlacken 25 sind jeweils vergrößert dargestellt (siehe vergrößerte Darstellungen A, B über Figur 29). Wie anhand der Figuren 30 und 31 veranschaulicht ist, wird die Schlacke 25 an der Werkstückoberfläche 17 und im Schnittspalt 15 durch den Laserstrahl 16 entfernt.

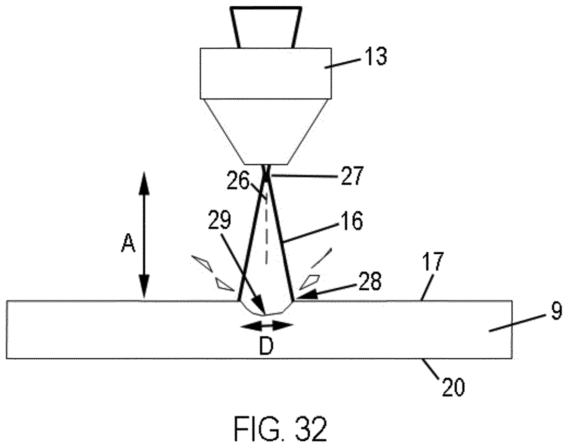

Anhand der Figuren 32 bis 36 werden weitere Ausgestaltungen einer nichterfindungsgemäßen Variante (d.h. Schritt b) wird vor Schritt a) ausgeführt) beschrieben.

Sei zunächst Figur 32 betrachtet, worin das plattenförmige Werkstück 9 mit den beiden zueinander parallelen, ebenen Werkstückoberflächen 17, 20 und die Düse 13 gezeigt sind. Der aus der Düse 13 austretende Laserstrahl 16 (sowie das nicht näher dargestellte Prozessgas) treffen auf die oberseitige Werkstückoberfläche 17. Der Laserstrahl 16 ist in Form eines Strahlkegels mit einer zentrischen Strahlachse 26 ausgebildet und in einem Fokus 27 fokussiert. Die zentrische Strahlachse 26, welche der Symmetrieachse des Strahlkegels entspricht, ist senkrecht zur ersten Werkstückoberfläche 17 gerichtet. Die Düse 13 hat einen relativ großen Arbeitsabstand A von der ersten Werkstückoberfläche 17 und der Fokus 27 befindet sich nah an der Düse 13, wobei sich das Werkstück 9 im divergenten Bereich des Laserstrahls 16 befindet, was zu einem relativ breiten Strahlfleck 28 mit einem relativ großen Strahldurchmesser D auf dem Werkstück 9 bzw. der oberseitigen Werkstückoberfläche 17 führt. Der Strahldurchmesser D bemisst sich senkrecht zur Strahlachse 26 und an jener Stelle, an der der Laserstrahl 16 auf das Werkstück 9 trifft. Die Fokuslage und damit der Strahldurchmesser D sind so gewählt, dass die Leistungsdichte des Laserstrahls 16 auf dem Werkstück 9 relativ gering ist und der Laserstrahl 16 lediglich eine Mulde 29 erzeugt und das Werkstück 9 nicht penetriert wird (nicht-trennende Bearbeitung).

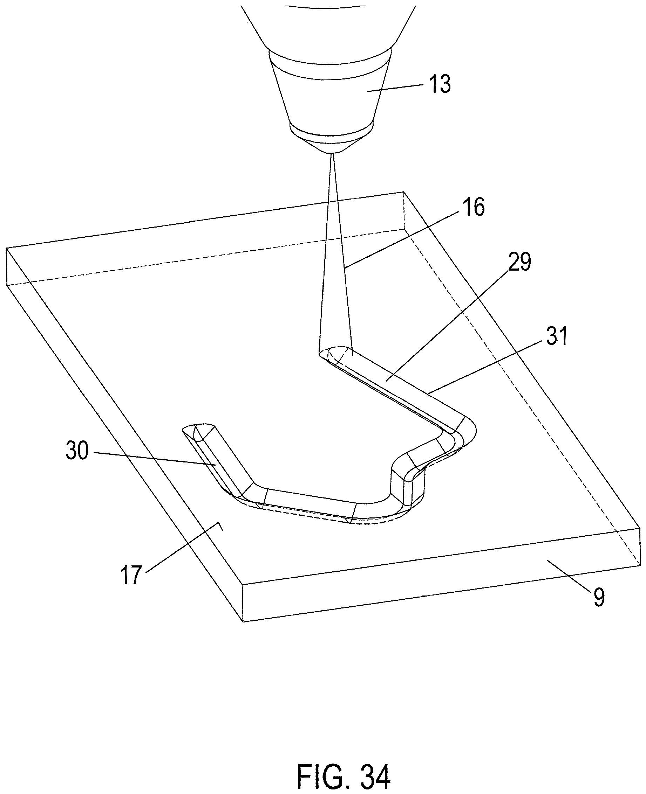

Beim Erzeugen der Mulde 29 wird der Laserstrahl 16 bzw. die Düse 13 in einer zur Ebene der Werkstückauflage 5 parallelen (horizontalen) Ebene bewegt. Die Bewegung des Laserstrahls 16 beim Erzeugen der Mulde 29 umfasst grundsätzlich mindestens eine horizontale Bewegungskomponente. Die Bewegung des Laserstrahls 16 kann sich auch aus zwei zueinander senkrechten (z.B. horizontalen) Bewegungskomponenten (x- und y-Richtung) zusammensetzen, wobei der Laserstrahl 16 entlang einer gekurvten Bahn 30, insbesondere entlang einer offenen oder geschlossenen Kreisbahn bewegt wird (siehe auch Figur 34). Die Bahn 30 des Laserstrahls 16 entspricht der Modifikationslinie 18. Die Mulde 29 hat somit stets eine längliche bzw. langgestreckte Form. Die Längsform bzw. der Verlauf der Mulde 29 kann wahlfrei definiert werden.

Senkrecht zu ihrer Erstreckung kann die Mulde 29 wahlfrei mit einer definierten Querschnittform versehen werden. Insbesondere kann die Fokuslage und damit der Strahldurchmesser D während der Erzeugung der Mulde 29 variiert werden, um Tiefe und/oder Querschnittform der Mulde 29 gezielt einzustellen. Bei einer Verringerung des Strahldurchmessers D auf dem Werkstück 9 wird die Mulde 29 tiefer, d.h. die Flanken werden steiler, wohingegen die Mulde 29 flacher wird, d.h. die Flanken werden weniger steil, wenn der Strahldurchmesser D auf dem Werkstück 9 vergrößert wird.

In Figur 34 ist die Erzeugung einer länglichen Mulde 29 in beispielhafter Weise schematisch veranschaulicht. Demnach wird der Laserstrahl 16 entlang einer gekurvten (nicht-geradlinigen) Bahn 30 entlang einer Modifikationslinie 18 bewegt, wobei die Mulde 29 mit dementsprechendem Verlauf erzeugt wird.

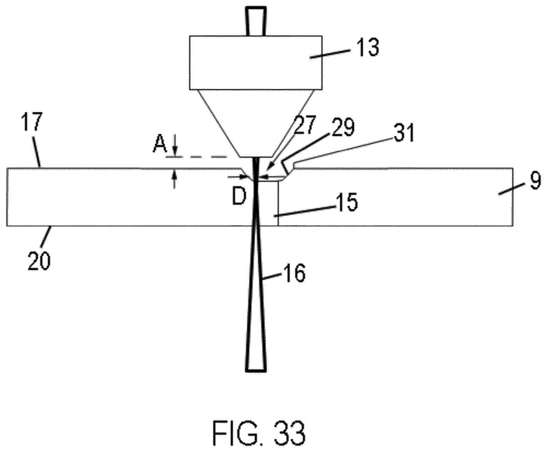

Anschließend wird ein Schnittspalt 15 innerhalb der Mulde 29 erzeugt, was auch in Figur 33 veranschaulicht ist. Beispielsweise wird zur Erzeugung des Schnittspalts 15 der Strahlkopf 3 bzw. die Düse 13 hin zur oberseitigen Werkstückoberfläche 17 (in vertikaler Richtung) verfahren, so dass im Vergleich zur Herstellung der Mulde 29 ein wesentlich geringerer Arbeitsabstand A zwischen der Düse 13 und der oberseitigen Werkstückoberfläche 17 vorliegt. Der Arbeitsabstand A zur Herstellung des Schnittspalts 15 ist beispielsweise mindestens 6-fach kleiner, insbesondere mindestens 10-fach kleiner, als der Arbeitsabstand A zur Erzeugung der Mulde 29. In entsprechender Weise sind der Strahlfleck 28 und der Strahldurchmesser D auf dem Werkstück wesentlich kleiner. Beispielsweise ist die Querschnittfläche des Strahlflecks 28 auf dem Werkstück 9 mindestens 6-fach kleiner, insbesondere mindestens 10-fach kleiner. Der Fokus 27 des Laserstrahls 16 befindet sich innerhalb des Werkstücks 9. Konkret ist der Strahldurchmesser D zum Erzeugen des Schnittspalts 15 so bemessen, dass die Leistungsdichte des Laserstrahls 16 auf dem Werkstück 9 zu einer trennenden Bearbeitung (Penetration) des Werkstücks 9 führt.

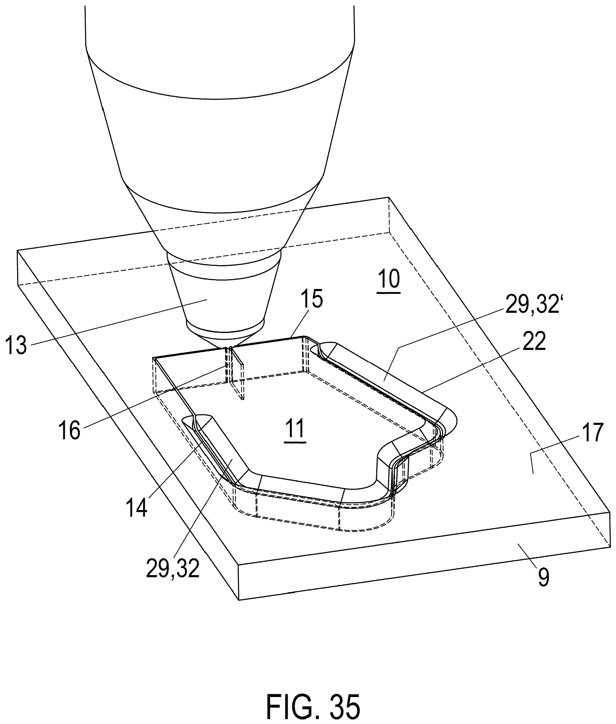

Ergänzend sei nun Figur 35 betrachtet. Beim Erzeugen des Schnittspalts 15 wird der Laserstrahl 16 in einer zur Ebene der Werkstückauflage 5 parallelen (z.B. horizontalen) Ebene verfahren. Die Bewegung des Laserstrahls 16 beim Erzeugen des Schnittspalts 15 umfasst zwei zueinander senkrechte (z.B. horizontale) Bewegungskomponenten (x- und y-Richtung), wobei der Laserstrahl 16 entlang einer Schnittlinie 14 bewegt wird, wodurch der Schnittspalt 15 erzeugt wird. Die Schnittlinie 14 ist innerhalb der Mulde 29 angeordnet. Die Schnittlinie 14 entspricht der Kontur eines von dem Werkstück 9 auszuschneidenden Werkstückteils 11. Die Schnittlinie 14 hat hier beispielsweise einen nichtlinearen und nicht-runden Verlauf, wobei gleichermaßen ein kreisrunder Verlauf möglich wäre. Wie in Figur 35 veranschaulicht, erstreckt sich die Mulde 29 beispielswiese nicht entlang der kompletten Schnittlinie 14, sondern lediglich entlang eines Abschnitts hiervon.

Der Schnittspalt 15 wird innerhalb der Mulde 29 erzeugt und erstreckt sich darüber hinaus. Der Schnittspalt 15 hat eine längliche bzw. langgestreckte Form. Die Längsform bzw. Verlauf des Schnittspalts 15 kann wahlfrei definiert werden, mit der Maßgabe, dass der Schnittspalt 15 stets der Schnittlinie 14 bzw. Kontur des Werkstückteils 11 folgt und innerhalb der Mulde 29 ausgebildet wird. Innerhalb der Mulde 29 entspricht der Verlauf des Schnittspalts 15 dem Verlauf der Mulde 29.

Die Bahnen des Laserstrahls 16 bei der Erzeugung der Mulde 29 und des Schnittspalts 15 sind äquidistant angeordnet. Wie in Figur 35 veranschaulicht, wird der Laserstrahl 16 beim Erzeugen des Schnittspalts 15 über die Mulde 29 hinausgeführt und der Schnittspalt 15 wird geschlossen, so dass das Werkstückteil 11 (in Form eines Innenbutzens) aus dem Werkstück 9 freigeschnitten wird. Durch Abtrennen des Werkstückteils 11 vom Restwerkstück 11 wird eine Durchbrechung bzw. Loch im Restwerkstück 11 erzeugt.

In einer nicht gezeigten Variante könnte die Mulde 29 beispielsweise einen kreisförmig-geschlossenen Verlauf haben, wobei der Schnittspalt 15 dem Verlauf der Mulde 29 folgend demzufolge auch einen kreisförmig-geschlossenen Verlauf hätte. In diesem Fall würde ein kreis- bzw. scheibenförmiges Werkstückteil 11 aus dem Werkstück 9 ausgeschnitten werden, so dass ein kreisrundes Loch im Restwerkstück 10 erzeugt wird.

Denkbar wäre auch, dass das Werkstückteil 11 durch den Laserstrahl 16 nicht vollständig ausgeschnitten (freigeschnitten) wird, sondern dass ein oder mehrere Stege (z.B. Microjoints) zwischen Werkstückteil 11 und Restwerkstück 10 verbleiben. Die Stege können durch den Laserstrahl 16 oder anderweitig durchtrennt werden, um das Werkstückteil 11 vom Restwerkstück 10 zu entfernen. Beispielsweise könnte das Werkstückteil 11 aus dem Werkstück 9 herausgebrochen werden.

Dort, wo die Mulde 29 ausgebildet ist, ist der Schnittspalt 15 stets innerhalb der Mulde 29 angeordnet, wobei der Schnittspalt 15 bahnparallel zur Mulde 29 erzeugt wird. Wie in Figur 35 veranschaulicht, ist der Schnittspalt 15 in Bezug auf eine Richtung senkrecht zur Erstreckung der Mulde 29 beispielsweise zentriert angeordnet. Der Strahlfleck 28 zur Erzeugung des Schnittspalts 15 befindet sich nur innerhalb der Mulde 29.

Die Mulde 29 wird an der oberseitigen Werkstückoberfläche 17 von einem (geschlossenen) Muldenrand 31 begrenzt bzw. umrandet. Die Mulde 29 ist eine Einsenkung bzw. Vertiefung des Werkstücks 9 an der Werkstückoberfläche 17. Der Muldenrand 31 ist als jener Bereich des Werkstücks 9 definiert, an dem sich die Mulde 29 zum Innern des Werkstücks 9 hin beginnt zu vertiefen. Der Schnittspalt 15 ist bezogen auf eine Richtung senkrecht zur Erstreckung der Mulde 29 stets vom Muldenrand 31 beabstandet (insbesondere in Sicht senkrecht durch die Ebene der Werkstückoberfläche 17), d.h. der Schnittspalt 15 weist bezogen auf eine Richtung senkrecht zur Erstreckung der Mulde 29 stets einen von Null verschiedenen Abstand zum Muldenrand 31 auf.

Vorzugsweise ist der Schnittspalt 15, bezogen auf eine Richtung senkrecht zur Erstreckung der Mulde 29, innerhalb der Mulde 29 zentriert, wobei er stets einen gleichbleibenden (konstanten) kürzesten Abstand zum Muldenrand 31 hat. Der Schnittspalt 15 befindet sich in Sicht senkrecht durch die plane Werkstückoberfläche 17 bezogen auf eine Richtung senkrecht zur Erstreckung der Mulde 29 innerhalb der Mulde 29, d.h. bezogen auf eine (senkrechte) Projektion von Schnittspalt 15 und Mulde 29 in die Ebene der Werkstückoberfläche 17. Die Mulde 29 vertieft sich zum Schnittspalt 15 hin, wobei der Schnittspalt 15 im Muldengrund angeordnet ist.

Die Mulde 29 formt beispielsweise eine Verrundung der Schnittkante des Schnittspalts 15. Besonders vorteilhaft wird die Mulde 29 so ausgebildet, dass sie eine Fase 21 des Schnittspalts 15 ist. Vorzugsweise wird der Schnittspalt 15 als geschlossener Spalt, insbesondere als ringförmig geschlossener Spalt (Ringspalt) ausgebildet, so dass ein Loch im Werkstück 9 verbleibt. Der Schnittspalt 15 kann dann vorteilhaft für eine Befestigung eines aus dem Werkstück 9 auszuschneidenden Werkstückteils dienen, wobei ein Schrauben- oder Nietkopf im verbleibenden Rest der Mulde 29 versenkbar ist, der als Fase dient. Die Mulde 29 weist restwerkstückseitig einen Muldenabschnitt 32' und werkstückteilseitig einen Muldenabschnitt 32 auf.

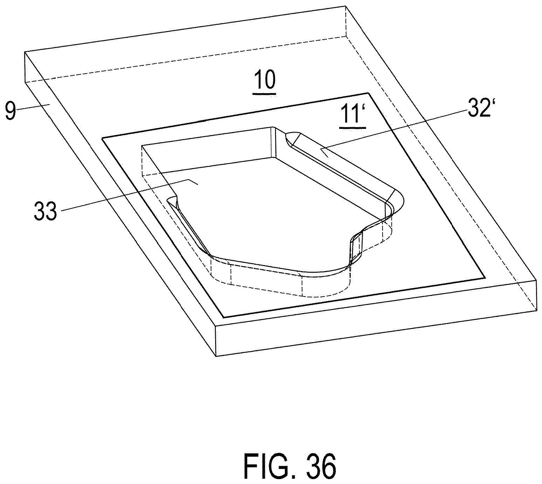

In Figur 36 ist das Restwerkstück 10 mit Loch 33 nach Entfernen des Werkstückteils 11 gezeigt. Das Restwerkstück 10 weist am Loch 33 den am Restwerkstück 10 verbleibenden Muldenabschnitt 32' der Mulde 29 auf (der andere Muldenabschnitt 32 befindet sich am entfernten Werkstückteil 11). Der Muldenabschnitt 32' kann beispielsweise als Fase ausgebildet sein.

Möglich wäre auch, das Loch 33 kreisrund auszubilden und einen komplett umlaufenden Muldenabschnitt 32' beispielsweise in Form einer Fase auszubilden. Vorteilhaft befindet sich das Loch 33, gegebenenfalls mit einem oder mehreren weiteren Löchern, innerhalb der Kontur eines größeren Werkstückteils 11', das vom Laserstrahl 16 ausgeschnitten werden kann. In Figur 36 ist ein solches Werkstückteil 11' anhand einer Kontur schematisch angedeutet. Auf diese Weise können besonders einfach Werkstückteile mit Löchern, die jeweils eine Fase aufweisen, hergestellt werden. Die Löcher können insbesondere zum Befestigen des später ausgeschnittenen Werkstückteils 11' dienen.

In den vorstehend beschriebenen Ausgestaltungen des nicht-erfindungsgemäßen Verfahrens wurde zunächst eine Mulde 29 und anschließend ein Schnittspalt 15 innerhalb der Mulde 29 erzeugt. Werden eine Vielzahl von Mulden 29 mit einem jeweiligen Schnittspalt 15 im Werkstück 9 erzeugt, ist es möglich, dass nach dem Erzeugen einer jeweiligen Mulde 29 unmittelbar darauffolgend der Schnittspalt 15 innerhalb der Mulde 29 erzeugt wird. Möglich ist jedoch auch, dass mehrere Mulden 29 unmittelbar aufeinanderfolgend erzeugt werden, ohne dass zwischen der Erzeugung von zwei Mulden 29 ein Schnittspalt 15 erzeugt wird, gefolgt von dem Erzeugen eines Schnittspalts 15 innerhalb einer jeweiligen Mulde 29, wobei die Schnittspalte 15 unmittelbar aufeinanderfolgend erzeugt werden, ohne dass zwischen der Erzeugung von zwei Schnittspalten 15 eine Mulde 29 erzeugt wird.

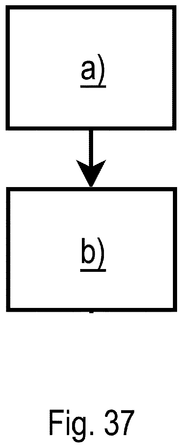

In Figur 37 ist ein Flussdiagramm des erfindungsgemäßen Verfahrens veranschaulicht. Das Verfahren umfasst das Schneiden eines Abschnitts (15-1, 15-2, 15-3, 15-4, 15-5) eines das Werkstück (9) durchtrennenden Schnittspalts (15) entlang einer Schnittlinie (14) oder Schneiden eines geschlossenen Schnittspalts (15) entlang der Schnittlinie (14), wobei Schnittkanten (19, 19') am Werkstückteil (11) und Restwerkstück (10) gebildet werden (Schritt a),

Das Verfahren umfasst weiterhin das Erzeugen einer Modifikation des Werkstücks (9), gewählt aus einer Fase (21), einer Verrundung (34) und einer Mulde (29), an einer Werkstückoberseite (35) entlang einer Modifikationslinie (18), während das Werkstückteil (11) mit dem Restwerkstück (10) verbunden ist (Schritt b).

Hierbei ist der Laserstrahl in den Schritten a) und b) senkrecht zur Werkstückoberfläche ausgerichtet. Ein Gasdruck des Prozessgases in Schritt b) beträgt weniger als 7 bar und insbesondere zwischen 3 bar und 6 bar.

Gemäß der Erfindung wird in Schritt a) ein Abschnitt (15-1, 15-2, 15-3, 15-4, 15-5) des Schnittspalts (15) entlang der Schnittlinie (14) erzeugt, und anschließend wird in Schritt b) mindestens ein Teil mindestens einer der Schnittkanten (19, 19') am Werkstückteil (11) oder am Restwerkstück (10) mit einer Fase (21) oder einer Verrundung (34) versehen.

Wie sich aus vorstehender Beschreibung ergibt, stellt die Erfindung ein neuartiges Verfahren zur Strahlbearbeitung eines platten- oder rohrförmigen Werkstücks zur Verfügung, bei dem das noch nicht freigeschnittene Werkstückteil und/oder das Restwerkstück entlang einer Modifikationslinie einer Modifikation durch den Laserstrahl unterzogen wird. Dies macht eine mechanische Modifikation des freigeschnittenen Werkstückteils verzichtbar, so dass die Herstellung von Werkstückteilen einfacher, schneller und kostengünstiger erfolgen kann. In besonders vorteilhafter Weise kann durch die starre, fixierte Lage zwischen Werkstückteil und Restwerkstück in einfacher Weise eine besonders genaue Modifikation des insbesondere teilweise ausgeschnittenen Werkstückteils erfolgen, so dass hohen Güteanforderungen genügt werden kann. Eine Implementierung des erfindungsgemäßen Verfahrens in bereits bestehenden Laserbearbeitungsvorrichtungen ist in einfacher Weise möglich, ohne hierfür aufwändige technische Maßnahmen vorsehen zu müssen. Vielmehr kann durch bloßen Eingriff in die Maschinensteuerung eine gewünschte Modifikation des Werkstücks durch das erfindungsgemäße Verfahren realisiert werden.

### Bezugszeichenliste

- 1: Laserbearbeitungsvorrichtung
- 2: Laserschneideinrichtung
- 3: Laserbearbeitungskopf
- 4: Arbeitstisch
- 5: Werkstückauflage
- 6: Querträger
- 7: Führungsschlitten
- 8: Laserstrahlquelle
- 9: Werkstück
- 10: Restwerkstück
- 11,11': Werkstückteil
- 12: Steuereinrichtung
- 13: Düse
- 14: Schnittlinie
- 14-1, 14-2, 14-3, 14-4, 14-5: Abschnitt der Schnittlinie
- 15: Schnittspalt
- 15-1, 15-2, 15-3, 15-4, 15-5: Abschnitt des Schnittspalts
- 16: Laserstrahl
- 17: oberseitige Werkstückoberfläche
- 18: Modifikationslinie
- 19, 19': Schnittkante
- 20: unterseitige Werkstückoberfläche
- 21: Fase
- 22: Modifikationszone
- 22-1, 22-2, 22-3, 22-4, 22-4': Abschnitt der Modifikationszone
- 23: Steg
- 24: Kreis
- 25: Schlacke
- 26: Strahlachse
- 27: Fokus
- 28: Strahlfleck
- 29: Mulde
- 30: Bahn
- 31: Muldenrand
- 32, 32': Muldenabschnitt
- 33: Loch
- 34: Verrundung
- 35: Werkstückoberseite
- 36: Werkstückunterseite

## Patentansprüche

1. Verfahren zur Herstellung mindestens eines Werkstückteils (11) und eines Restwerkstücks (10) aus einem Werkstück (9) mittels eines gemeinsam aus einer Düse (13) eines Laserbearbeitungskopfs (2) austretenden Laserstrahls (16) und Prozessgases zum Austrieb von geschmolzenem Werkstückmaterial, mit den folgenden Schritten:
Schritt a): Schneiden eines Abschnitts (15-1, 15-2, 15-3, 15-4, 15-5) eines das Werkstück (9) durchtrennenden Schnittspalts (15) entlang einer Schnittlinie (14) oder Schneiden eines geschlossenen Schnittspalts (15) entlang der Schnittlinie (14), wobei Schnittkanten (19, 19') am Werkstückteil (11) und Restwerkstück (10) gebildet werden,
Schritt b): Erzeugen einer Modifikation des Werkstücks (9), gewählt aus einer Fase (21) und einer Verrundung (34), an einer Werkstückoberseite (35) entlang einer Modifikationslinie (18), während das Werkstückteil (11) mit dem Restwerkstück (10) verbunden ist,
wobei der Laserstrahl (16) in den Schritten a) und b) senkrecht zu einer Werkstückoberfläche (17) der Werkstückoberseite (35) ausgerichtet ist und **dadurch gekennzeichnet**, das
- Schritt a) vor Schritt b) ausgeführt wird, wobei in Schritt a) ein Abschnitt (15-1, 15-2, 15-3, 15-4, 15-5) des Schnittspalts (15) entlang der Schnittlinie (14) erzeugt wird, und anschließend in Schritt b) mindestens ein Teil mindestens einer der Schnittkanten (19, 19') am Werkstückteil (11) oder am Restwerkstück (10) mit einer Fase (21) oder einer Verrundung (34) versehen wird, wobei ein Gasdruck des Prozessgases vor dem Austritt aus der Düse) in Schritt b) weniger als 7 bar, insbesondere zwischen 3 und 6 bar, beträgt.

2. Verfahren nach Anspruch 1, bei welchem in Schritt b) ein Abstand (A) zwischen einer den Laserstrahl (16) abgebenden Düse (13) und der Werkstückoberfläche (17) größer ist als in Schritt a), wobei der Abstand (A) zwischen einer den Laserstrahl (16) abgebenden Düse (13) und der Werkstückoberfläche (17)
i) beim Erzeugen einer Fase (21) mit Sauerstoff als Prozessgas mindestens 9 mm, mindestens 20 mm oder mindestens 35 mm, oder
ii) beim Erzeugen einer Verrundung (34) mit Stickstoff als Prozessgas mindestens 1 mm, mindestens 6 mm oder mindestens 9 mm,
beträgt.

3. Verfahren nach Anspruch 1 oder 2, bei welchem in Schritt b):
i) ein Fokus (27) des Laserstrahls (16) auf oder oberhalb der Werkstückoberfläche (17) liegt,
ii) eine mittlere Leistung des Laserstrahls (16) weniger als 3500 W beträgt,
iii) ein Fokusdurchmesser (D) des Laserstrahls (16) mindestens 150 µm beträgt, und/oder
vii) eine Vorschubgeschwindigkeit des Laserbearbeitungskopfs (2) mindestens 1 m/min beträgt.

4. Verfahren nach einem der Ansprüche 1 bis 3, wobei für ein Werkstück (9) aus Baustahl in Schritt b) Sauerstoff als Prozessgas eingesetzt wird.

5. Verfahren nach einem der Ansprüche 1 bis 4, bei welchem eine Leistungsdichte des Laserstrahls (16) in Schritt b) bezüglich einer Leistungsdichte in Schritt a) verringert wird durch:
i) Verringern einer Leistung des Laserstrahls (16),
ii) Erhöhen einer Vorschubgeschwindigkeit des Laserstrahls (16),
iii) Defokussieren des Laserstrahls (16) durch Ändern einer Fokuslage, und/oder
iv) Ändern eines Strahldurchmessers (D) des Laserstrahls (16) an der Werkstückoberfläche (17).

6. Verfahren nach einem der Ansprüche 1 bis 5, wobei die Schnittlinie (14) und die Modifikationslinie (18) parallel verlaufen und ein lateraler Versatz zwischen Schnittlinie (14) und Modifikationslinie (18) mindestens 0,2 mm und höchsten 1,5 mm beträgt.

7. Verfahren nach einem der Ansprüche 1 bis 6, bei welchem in Schritt b) der Laserstrahl (16) stets geradlinig entlang der Modifikationslinie (18) bewegt wird.

8. Verfahren nach einem der Ansprüche 1 bis 6, bei welchem in Schritt b) die Bewegung des Laserstrahls (16) entlang der Modifikationslinie (18) Bewegungskomponenten quer zur Modifikationslinie (18) aufweist, wobei der Laserstrahl (16) insbesondere
i) eine mäanderförmige Hin- und Her-Bewegung entlang der Modifikationslinie (18) vollführt, und/oder
ii) entlang geschlossener Bahnabschnitte, insbesondere geschlossener Kreise (24) oder Ellipsen, die entlang der Modifikationslinie (18) angeordnet sind, bewegt wird.

9. Verfahren nach Anspruch 8, bei welchem
i) eine Bewegungskomponente des Laserstrahls (16) quer zur Modifikationslinie (18) eine Ausdehnung von mindestens 0,5 mm und höchstens 5 mm aufweist, und/oder
ii) ein Überlapp der geschlossenen Bahnabschnitte (24) des Laserstrahls (16) entlang der Modifikationslinie (18) im Bereich von 0,5 mm bis 1 mm liegt.

10. Verfahren nach einem der Ansprüche 1 bis 9, bei welchem nach den Schritten a) und b) ein weiterer Schritt c) durchgeführt wird, welcher umfasst:
- Entfernen von während der Schritte a) und b) gebildeter Schlacke (25) von mindestens einer der Schnittkanten (19, 19') am Werkstückteil (11) oder am Restwerkstück (10), wobei der Laserstrahl (16) entlang der Schnittlinie (14) oder einer hierzu lateral versetzten Linie verfahren wird, und/oder
- Entfernen von während der Schritte a) und b) gebildeter Schlacke (25) von einer Fase (21) oder einer Verrundung (34), wobei der Laserstrahl (16) entlang der Modifikationslinie (18) oder einer hierzu lateral versetzten Linie verfahren wird.

11. Verfahren nach Anspruch 10, bei welchem in Schritt c)
i) eine Laserleistung kleiner ist als eine Laserleistung in Schritt a), und insbesondere weniger als 1000 W beträgt,
ii) ein Abstand (A) zwischen der Düse (13) und der Werkstückoberfläche (17) größer ist als in Schritt a) und insbesondere mindestens 5 mm, insbesondere zwischen 6 mm und 12 mm, beträgt,
iii) ein Gasdruck weniger als 7 bar, insbesondere zwischen 0,7 bar und 6 bar, beträgt, und/oder
iv) ein Fokusdurchmesser (D) des Laserstrahls (16) mindestens 150 µm beträgt.

12. Verfahren nach einem der Ansprüche 10 oder 11, bei welchem durch den in Schritt c) eingesetzten Laserstrahl (16) ein Freischneiden des Werkstückteils (11) vom Restwerkstück (10) erfolgt, wobei eine Laserleistung des Laserstrahls (16) insbesondere mindestens 500 W beträgt.

13. Verfahren nach Anspruch 1, bei welchem,
i) eine Mehrzahl von Schritten a) vor einem oder mehreren Schritten b) ausgeführt werden, und/oder
ii) eine Mehrzahl von Schritten a) und eine Mehrzahl von Schritten b) in alternierender Abfolge ausgeführt werden, wobei nach einem Schritt mit der einen Benennung jeweils ein Schritt mit der anderen Benennung ausgeführt wird.

14. Verfahren nach einem der Ansprüche 1 bis 13, bei welchem, wenn ein oder mehrere Schritte a) vor einem oder mehreren Schritten b) ausgeführt werden, ein oder mehrere Abschnitte (15-1, 15-2, 15-3) des Schnittspalts (15) entlang der Schnittlinie (14) erzeugt werden, wobei das Werkstückteil (11) durch einen oder mehrere Stege (23), insbesondere Microjoints oder Nanojoints, mit dem Restwerkstück (10) verbunden bleibt, und anschließend in dem einen oder mehreren Schritten b) mindestens ein Teil mindestens einer der Schnittkanten (19, 19') am Werkstückteil (11) oder am Restwerkstück (10) und die Stege (23) mit einer Fase (21) oder einer Verrundung (34) versehen werden.

## Claims

1. A method for producing at least one workpiece part (11) and a residual workpiece (10) from a workpiece (9) by means of a laser beam (16) emerging from a nozzle (13) of a laser processing head (2) together with process gas for expelling molten workpiece material, comprising the following steps:
Step a): Cutting of a section (15-1, 15-2, 15-3, 15-4, 15-5) of a cutting gap (15) which separates the workpiece (9) along a cutting line (14) or cutting of a closed cutting gap (15) along the cutting line (14), wherein cutting edges (19, 19') are formed on the workpiece part (11) and residual workpiece (10),
Step b): Producing a modification of the workpiece (9), selected from a chamfer (21) and a fillet (34), on a workpiece upper side (35) along a modification line (18) while the workpiece part (11) is connected to the residual workpiece (10),
wherein the laser beam (16) in steps a) and b) is oriented perpendicular to a workpiece surface (17) of the workpiece upper side (35) and **characterized in that**
- Step a) is carried out before step b), wherein in step a) a section (15-1, 15-2, 15-3, 15-4, 15-5) of the cutting gap (15) is produced along the cutting line (14), and subsequently in step b) at least a part of at least one of the cutting edges (19, 19') on the workpiece part (11) or on the residual workpiece (10) is provided with a chamfer (21) or a fillet (34), wherein a gas pressure of the process gas prior to exiting the nozzle in step b) is less than 7 bar, in particular between 3 and 6 bar.

2. The method according to claim 1, in which, in step b), a distance (A) between a nozzle (13) emitting the laser beam (16) and the workpiece surface (17) is greater than in step a), wherein the distance (A) between a nozzle (13) emitting the laser beam (16) and the workpiece surface (17)
i) is at least 9 mm, at least 20 mm or at least 35 mm when producing a chamfer (21) with oxygen as the process gas, or
ii) is at least 1 mm, at least 6 mm or at least 9 mm when producing a fillet (34) with nitrogen as the process gas.

3. The method according to claim 1 or 2, in which, in step b):
i) a focus (27) of the laser beam (16) lies on or above the workpiece surface (17),
ii) an average power of the laser beam (16) is less than 3500 W,
iii) a focal diameter (D) of the laser beam (16) is at least 150 µm, and/or
vii) a feed rate of the laser processing head (2) is at least 1 m/min.

4. The method according to any one of claims 1 to 3, wherein oxygen is used as a process gas in step b) for a workpiece (9) made of structural steel.

5. The method according to any one of claims 1 to 4, wherein a power density of the laser beam (16) in step b) is reduced with respect to a power density in step a) by:
i) reducing the power of the laser beam (16),
ii) increasing the feed rate of the laser beam (16),
iii) defocusing the laser beam (16) by changing a focal position, and/or
iv) changing a beam diameter (D) of the laser beam (16) on the workpiece surface (17).

6. The method according to any one of claims 1 to 5, wherein the cutting line (14) and the modification line (18) are parallel and a lateral offset between the cutting line (14) and the modification line (18) is at least 0.2 mm and at most 1.5 mm.

7. The method according to any one of claims 1 to 6, wherein in step b) the laser beam (16) is always moved in a straight line along the modification line (18).

8. The method according to any one of claims 1 to 6, wherein in step b) the movement of the laser beam (16) along the modification line (18) comprises movement components transverse to the modification line (18), wherein the laser beam (16) in particular
i) performs a meandering back and forth movement along the modification line (18), and/or
ii) is moved along closed path sections, in particular closed circles (24) or ellipses, which are arranged along the modification line (18).

9. The method according to claim 8, in which
i) a movement component of the laser beam (16) transverse to the modification line (18) has an extension of at least 0.5 mm and at most 5 mm, and/or
ii) an overlap of the closed path sections (24) of the laser beam (16) along the modification line (18) is in the range of 0.5 mm to 1 mm.

10. The method according to any one of claims 1 to 9, wherein after steps a) and b) a further step c) is carried out, which comprises:
- removal of slag (25) formed during steps a) and b) from at least one of the cut edges (19, 19') on the workpiece part (11) or on the residual workpiece (10), wherein the laser beam (16) is moved along the cutting line (14) or a line laterally offset thereto, and/or
- removal of slag (25) formed during steps a) and b) from a chamfer (21) or a fillet (34), wherein the laser beam (16) is moved along the modification line (18) or a line laterally offset thereto.

11. The method according to claim 10, in which, in step c)
i) a laser power is less than a laser power in step a), and in particular is less than 1000 W,
ii) a distance (A) between the nozzle (13) and the workpiece surface (17) is greater than in step a) and in particular is at least 5 mm, in particular between 6 mm and 12 mm,
iii) a gas pressure is less than 7 bar, in particular between 0.7 bar and 6 bar, and/or
iv) a focal diameter (D) of the laser beam (16) is at least 150 µm.

12. The method according to one of claims 10 or 11, wherein the laser beam (16) used in step c) cuts the workpiece part (11) free from the residual workpiece (10), wherein a laser power of the laser beam (16) is in particular at least 500 W.

13. The method according to claim 1, in which,
i) a plurality of steps a) are carried out before one or a plurality of steps b), and/or
ii) a plurality of steps a) and a plurality of steps b) are carried out in alternating sequence, wherein a step with one designation is followed in each case by a step with the other designation.

14. The method according to any one of claims 1 to 13, wherein, if one or a plurality of steps a) are carried out before one or a plurality of steps b), one or a plurality of sections (15-1, 15-2, 15-3) of the cutting gap (15) are produced along the cutting line (14), wherein the workpiece part (11) remains connected to the residual workpiece (10) by one or a plurality of webs (23), in particular microjoints or nanojoints, and then, in the one or a plurality of steps b), at least one part of at least one of the cut edges (19, 19') on the workpiece part (11) or on the residual workpiece (10) and the webs (23) are provided with a chamfer (21) or a fillet (34).

## Revendications

1. Procédé de fabrication d'au moins une partie de pièce (11) et d'un élément restant de la pièce (10) à partir d'une pièce (9), au moyen d'un faisceau laser (16) et d'un gaz de processus s'échappant conjointement d'une buse (13) d'une tête de traitement laser (2) pour l'expulsion du matériau de la pièce fondu, incluant les étapes suivantes :
Étape a) : Découpe d'une section (15-1, 15-2, 15-3, 15-4, 15-5) d'un interstice de coupe (15) traversant la pièce (9) le long d'une ligne de coupe (14) ou découpe d'un interstice de coupe fermé (15) le long de la ligne de coupe (14), dans lequel des arêtes de coupe (19, 19') sont formés sur la partie de pièce (11) et sur l'élément restant de la pièce (10),
Étape b) : Production d'une modification de la pièce (9), choisie parmi un chanfrein (21) et un arrondi (34), sur une face supérieure de la pièce (35) le long d'une ligne de modification (18), tandis que la partie de pièce (11) reste lié à l'élément restant de la pièce (10),
dans lequel le faisceau laser (16) est orienté de façon perpendiculaire à une surface de la pièce (17) de la face supérieure de la pièce (35) aux étapes a) et b), et caractérisé ainsi en ce que
- l'étape a) est réalisée avant l'étape b), dans laquelle, à l'étape a), une section (15-1, 15-2, 15-3, 15-4, 15-5) de l'interstice de coupe (15) le long de la ligne de coupe (14) est générée, et ensuite, à l'étape b), au moins une partie d'au moins une des arêtes de coupe (19, 19') de la partie de pièce (11) ou de l'élément restant de la pièce (10) est dotée d'un chanfrein (21) ou d'un arrondi (34), dans lequel la pression de gaz du gaz de processus avant sa sortie de la buse à l'étape b) est inférieure à 7 bars, en particulier entre 3 et 6 bars.

2. Procédé selon la revendication 1, au cours duquel, à l'étape b), une distance (A) entre une buse (13) émettant le faisceau laser (16) et la surface de la pièce (17) est supérieure à celle de l'étape a), dans lequel la distance (A) entre la buse (13) émettant le faisceau laser (16) et la surface de la pièce (17) est
i) au moins de 9 mm, au moins de 20 mm ou au moins de 35 mm lors de la production d'un chanfrein (21) avec de l'oxygène comme gaz de processus, ou
ii) au moins de 1 mm, au moins de 6 mm ou au moins de 9 mm lors de la production d'un arrondi (34) avec de l'azote comme gaz de processus.

3. Procédé selon la revendication 1 ou 2, au cours duquel, à l'étape b) :
i) le foyer (27) du faisceau laser (16) se situe sur ou au-dessus de la surface de la pièce (17),
ii) la puissance moyenne du faisceau laser (16) est inférieure à 3500 W,
iii) le diamètre du foyer (D) du faisceau laser (16) est d'au moins 150 µm, et/ou
vii) la vitesse d'avance de la tête de traitement laser (2) est d'au moins 1 m/min.

4. Procédé selon l'une des revendications 1 à 3, dans lequel, pour une pièce (9) en acier de construction, de l'oxygène est utilisé comme gaz de processus à l'étape b).

5. Procédé selon l'une des revendications 1 à 4, au cours duquel la densité de puissance du faisceau laser (16) à l'étape b) est réduite par rapport à la densité de puissance à l'étape a), en :
i) réduisant la puissance du faisceau laser (16),
ii) augmentant la vitesse d'avance du faisceau laser (16),
iii) défocalisant le faisceau laser (16) par modification de la position du foyer, et/ou
iv) modifiant un diamètre de faisceau (D) du faisceau laser (16) sur la surface de la pièce (17).

6. Procédé selon l'une des revendications 1 à 5, dans lequel la ligne de coupe (14) et la ligne de modification (18) s'étendent parallèlement, et un décalage latéral entre la ligne de coupe (14) et la ligne de modification (18) est d'au moins 0,2 mm et d'au plus 1,5 mm.

7. Procédé selon l'une des revendications 1 à 6, au cours duquel, à l'étape b), le faisceau laser (16) se déplace toujours en ligne droite le long de la ligne de modification (18).

8. Procédé selon l'une des revendications 1 à 6, au cours duquel, à l'étape b), le déplacement du faisceau laser (16) le long de la ligne de modification (18) présente des composantes de déplacement perpendiculaires à la ligne de modification (18), dans lequel le faisceau laser (16) en particulier
i) effectue un mouvement d'oscillation de forme sinusoïdale le long de la ligne de modification (18), et/ou
ii) est déplacé le long de sections de trajectoire fermées, en particulier des cercles (24) ou ellipses fermés, disposés le long de la ligne de modification (18).

9. Procédé selon la revendication 8, au cours duquel
i) une composante de déplacement du faisceau laser (16) perpendiculaire à la ligne de modification (18) présente une amplitude d'au moins 0,5 mm et d'au plus 5 mm, et/ou
ii) un chevauchement des sections de trajectoire (24) fermées du faisceau laser (16) le long de la ligne de modification (18) se situe dans une fourchette de 0,5 mm à 1 mm.

10. Procédé selon l'une des revendications 1 à 9, au cours duquel, après les étapes a) et b), une étape c) supplémentaire est réalisée, laquelle comprend :
- l'élimination des scories (25) formées au cours des étapes a) et b) sur au moins une des arêtes de coupe (19, 19') de la partie de pièce (11) ou de l'élément restant de la pièce (10), dans lequel le faisceau laser (16) est manoeuvré le long de la ligne de coupe (14) ou d'une ligne décalée latéralement par rapport à celle-ci, et/ou
- l'élimination des scories (25) formées au cours des étapes a) et b) d'un chanfrein (21) ou d'un arrondi (34), dans lequel le faisceau laser (16) est manoeuvré le long de la ligne de modification (18) ou d'une ligne décalée latéralement par rapport à celle-ci.

11. Procédé selon la revendication 10, au cours duquel, à l'étape c)
i) une puissance du laser est inférieure à une puissance du laser à l'étape a), et est en particulier inférieure à 1000 W,
ii) la distance (A) entre la buse (13) et la surface de la pièce (17) est supérieure à celle de l'étape a), et est en particulier au moins de 5 mm, en particulier entre 6 mm et 12 mm,
iii) la pression de gaz est inférieure à 7 bars, en particulier entre 0,7 bar et 6 bars, et/ou
iv) le diamètre du foyer (D) du faisceau laser (16) est d'au moins 150 µm.

12. Procédé selon l'une des revendications 10 ou 11, au cours duquel le faisceau laser (16) utilisé à l'étape c) permet une dissociation par découpe de la partie de pièce (11) de l'élément restant de la pièce (10), dans lequel une puissance laser du faisceau laser (16) est en particulier d'au moins 500 W.

13. Procédé selon la revendication 1, au cours duquel,
i) une pluralité d'étapes a) est réalisée avant une ou plusieurs étapes b), et/ou
ii) une pluralité d'étapes a) et une pluralité d'étapes b) sont réalisées selon une séquence alternée, dans laquelle après une étape portant l'une des désignations, une étape portant l'autre désignation est respectivement réalisée.

14. Procédé selon l'une des revendications 1 à 13, au cours duquel, lorsqu'une ou plusieurs étapes a) sont réalisées avant une ou plusieurs étapes b), une ou plusieurs sections (15-1, 15-2, 15-3) de l'interstice de coupe (15) le long de la ligne de coupe (14) sont générées, dans lequel la partie de pièce (11) reste liée à l'élément restant de la pièce (10) par un ou plusieurs ponts de maintien (23), en particulier des micro-joints ou nanojoints, et ensuite, au cours de ladite une ou plusieurs étapes b), au moins une partie d'au moins une des arêtes de coupe (19, 19') sur la partie de pièce (11) ou l'élément restant de la pièce (10) ainsi que des ponts de maintien (23) sont dotés d'un chanfrein (21) ou d'un arrondi (34).
